# EUROPEAN PATENT APPLICATION

(11) **EP 4 550 890 A1**
(43) Date of publication of application: **07.05.2025**
(21) Application number: 23845257.7
(22) Date of filing: 04.07.2023
(51) Int. Cl.: H04W 40/22

(54) **COMMUNICATION METHOD, COMMUNICATION APPARATUS AND COMPUTER-READABLE STORAGE MEDIUM**

(30) Priority: 29.07.2022 CN 202210911092
(71) Applicant: Huawei Technologies Co., Ltd., Shenzhen, Guangdong 518129 (CN)
(72) Inventor: XU, Ruixiong, Shenzhen, Guangdong 518129 (CN); PENG, Wenjie, Shenzhen, Guangdong 518129 (CN); PAN, Xiaodan, Shenzhen, Guangdong 518129 (CN)
(74) Representative: Maiwald GmbH
(86) International application number: PCT/CN2023/105692
(87) International publication number: WO 2024/022044

(57) **Abstract**

Embodiments of this application disclose a communication method, a communication apparatus, and a computer-readable storage medium. The method includes: A third terminal device receives a first message from a first terminal device, where the first message carries a first identifier, and the first identifier indicates a second terminal device. The third terminal device sends a second message to the second terminal device based on the first message. According to the method described in this application, the third terminal device can determine a specific terminal device to which a currently received message should be forwarded, to ensure normal communication in a U2U relay scenario.

## Description

This application claims priority to Chinese Patent Application No. 202210911092.3, filed with the China National Intellectual Property Administration on July 29, 2022 and entitled "COMMUNICATION METHOD, COMMUNICATION APPARATUS, AND COMPUTER-READABLE STORAGE MEDIUM", which is incorporated herein by reference in its entirety.

### TECHNICAL FIELD

This application relates to the field of communication technologies, and in particular, to a communication method, a communication apparatus, and a computer-readable storage medium.

### BACKGROUND

To improve sidelink (Sidelink, SL) coverage enhancement, terminals may communicate with each other via a relay (Relay) terminal. To be specific, when sending a message to a target terminal, a source terminal may first send the message to the relay terminal, and the relay terminal forwards the message to the target terminal. Such a manner in which the source terminal performs discovery or communication with the target terminal via the relay terminal is referred to as user equipment-to-user equipment relay (UE-to-UE Relay, U2U Relay) communication.

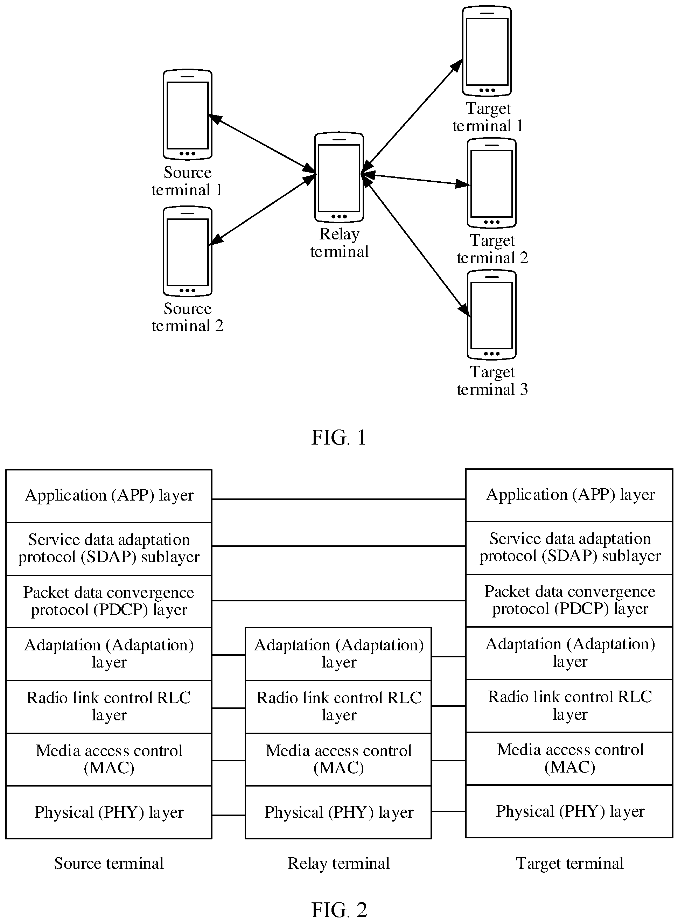

During U2U relay communication, when the source terminal sends the message to the target terminal, a layer 2 identifier (layer 2 ID, L2 ID) of the relay terminal is filled as a destination address. When the source terminal establishes unicast communication connections to a plurality of target terminals via the relay terminal, after the relay terminal receives the message sent by the source terminal, the relay terminal may not know a specific target terminal to which the message should be forwarded. For example, as shown in FIG. 1, it is assumed that both a source terminal 1 and a source terminal 2 establish unicast connections to a target terminal 1, a target terminal 2, and a target terminal 3 via a relay terminal. When the source terminal 1 sends a message to the target terminal 1 via the relay terminal, because the message carries only an L2 ID of the relay terminal, the relay terminal does not know to which one of the target terminal 1, the target terminal 2, or the target terminal 3 the message should be forwarded. Similarly, when the target terminal 1 returns a message to the source terminal 1, because the message carries only the L2 ID of the relay terminal, the relay terminal does not know to which one of the source terminal 1 or the source terminal 2 the message should be forwarded.

### SUMMARY

This application provides a communication method, a communication apparatus, and a computer-readable storage medium, to allow a relay terminal to determine a specific terminal to which a currently received message should be forwarded, to ensure normal communication in a U2U relay scenario.

According to a first aspect, this application provides a communication method, applied to a third terminal device. The method includes: receiving a first message from a first terminal device, where the first message carries a first identifier, and the first identifier indicates a second terminal device; and sending a second message to the second terminal device based on the first message.

According to the method described in the first aspect, the first identifier can be used by the third terminal device to determine, when the third terminal device receives the first message, that content in the first message should be transferred to the second terminal device. Based on this implementation, a relay terminal can determine, in a U2U relay M:N network topology scenario, a specific target terminal to which a received message should be forwarded. This helps ensure normal communication in a U2U relay scenario.

In a possible implementation, a message type of the first message and a message type of the second message both are one of the following types: a direct communication request DCR message, a direct communication accept DCA message, a security mode command message, or a security mode complete message.

In a possible implementation, the method further includes: receiving a third message from the first terminal device, where the third message carries the first identifier; and receiving a fourth message from the second terminal device, where the fourth message carries a second identifier, and the second identifier indicates the first terminal device. The first identifier (the second identifier) helps the third terminal device determine, when the third terminal device receives a message sent by the first terminal device (the second terminal device), that content in the message should be transferred to a specific terminal device. Based on this implementation, the third terminal device can determine, in a U2U relay M:N network topology scenario, a specific terminal device to which a received message should be forwarded. This helps ensure normal communication in a U2U relay scenario.

In a possible implementation, a message type of the third message and/or a message type of the fourth message are/is one of the following types: a DCR message, a DCA message, a security mode command message, a security mode complete message, a solicitation message, or a response message.

In a possible implementation, the method further includes: sending a fifth message to the first terminal device, where the fifth message carries the first identifier and information about the second terminal device, and the fifth message is used to determine a correspondence between the first identifier and the second terminal device; and sending a sixth message to the second terminal device, where the sixth message carries a second identifier and information about the first terminal device, and the sixth message is used to determine a correspondence between the second identifier and the first terminal device. After obtaining the first identifier, the first terminal device may determine the correspondence between the first identifier and the second terminal device based on the information about the second terminal device carried in the fifth message. Subsequently, when needing to communicate with the second terminal device via the third terminal device, the first terminal device includes the first identifier indicating the second terminal device in a message. After obtaining the message sent by the first terminal device, the third terminal device may determine, based on the first identifier carried in the message, that the message needs to be forwarded to the second terminal device. Similarly, after obtaining the second identifier, the second terminal device determines the correspondence between the second identifier and the first terminal device. When communicating with the first terminal device via the third terminal device, the second terminal device includes the second identifier in a message, to indicate that the message needs to be sent to the first terminal device. In this way, the third terminal device can determine, in a U2U relay M:N network topology scenario, a specific terminal device to which a received message should be forwarded. This helps ensure normal communication in a U2U relay scenario.

In a possible implementation, a message type of the fifth message and/or a message type of the sixth message are/is one of the following types: a DCR message, a DCA message, a security mode command message, a security mode complete message, a solicitation message, a response message, or an announcement message.

In a possible implementation, the method further includes: sending a seventh message to the first terminal device, where the seventh message carries the information about the second terminal device; and sending an eighth message to the second terminal device, where the eighth message carries the information about the first terminal device. In this implementation, the seventh message indicates the second terminal device to establish a unicast communication connection to the third terminal device, and the first terminal device may communicate with the second terminal device via the third terminal device. The same applies to the eighth message, and details are not described again. Therefore, based on this implementation, when the first terminal device simultaneously establishes unicast communication connections to a plurality of other terminal devices, the first terminal device is uncertain that the current third terminal device is a relay terminal device between the first terminal device and which terminal device.

In a possible implementation, a message type of the seventh message and/or a message type of the eighth message are/is one of the following types: a DCR message, a DCA message, a security mode command message, or a security mode complete message.

In a possible implementation, a specific implementation of sending the second message to the second terminal device based on the first message is: replacing the first identifier carried in the first message with the second identifier, to obtain the second message; and sending the second message to the second terminal device. Based on this implementation, when receiving the second message, the second terminal device can determine, based on the second identifier in the second message, that the second message is from the first message sent by the first terminal device to the third terminal device.

In a possible implementation, the first message further carries the first identifier, and the second message is the same as the first message. Before the receiving a first message from a first terminal device, the method further includes: sending a ninth message to the first terminal device, where the ninth message carries the second identifier; and sending a tenth message to the second terminal device, where the tenth message carries the first identifier. Based on this implementation, before sending the first message, the first terminal device can determine, based on the ninth message sent by the third terminal device, the second identifier allocated by the second terminal device or the third terminal device to the first terminal device, to include the identifier of the first terminal device and the first identifier of the second terminal device in the first message when sending the first message. When receiving the second message, the second terminal device determines, based on the second identifier in the second message, that the second message is from the first message sent by the first terminal device to the third terminal device; and can also determine, based on the first identifier in the second message, that the second message is sent to the second terminal device.

In a possible implementation, a message type of the ninth message and/or a message type of the tenth message are/is a radio resource control RRC message.

In a possible implementation, the second message carries the first identifier, the second identifier is the same as the first identifier, and the second message is the same as the first message. Based on this implementation, when receiving the second message, the second terminal device can obtain the first identifier in the second message. Because the first identifier is the same as the second identifier, the first identifier indicates that the second message is from the first message sent by the first terminal device to the third terminal device, and also indicates that the second message is sent to the second terminal device.

In a possible implementation, the first identifier is located in an adaptation layer header of the first message.

In a possible implementation, the first message further carries information about the second terminal device. A specific implementation of receiving the first message from the first terminal device is: receiving the first message from the first terminal device through a preset sidelink radio link control protocol RLC channel. A specific implementation of sending the second message to the second terminal device based on the first message is: sending the second message to the second terminal device based on the information about the second terminal device through a preset sidelink RLC channel.

According to a second aspect, this application provides a communication method, applied to a first terminal device. The method includes: sending a first message to a third terminal device, where the first message carries a first identifier, the first identifier indicates a second terminal device, and the first message is used by the third terminal device to send a second message to the second terminal device. For beneficial effects of the second aspect and the possible implementations of the second aspect, refer to the descriptions in the first aspect. Details are not described herein.

In a possible implementation, the second message carries a second identifier and/or the first identifier, and the second identifier indicates the first terminal device.

In a possible implementation, a message type of the first message and a message type of the second message both are one of the following types: a direct communication request DCR message, a direct communication accept DCA message, a security mode command message, or a security mode complete message.

In a possible implementation, the method further includes: sending a third message to the third terminal device, where the third message carries the first identifier.

In a possible implementation, a message type of the third message is one of the following message types: a DCR message, a DCA message, a security mode command message, a security mode complete message, a solicitation message, or a response message.

In a possible implementation, the method further includes: receiving a fifth message from the third terminal device, where the fifth message carries the first identifier and information about the second terminal device, and the fifth message is used to determine a correspondence between the first identifier and the second terminal device.

In a possible implementation, a message type of the fifth message is one of the following message types: a DCR message, a DCA message, a security mode command message, a security mode complete message, a solicitation message, a response message, or an announcement message.

In a possible implementation, the method further includes: receiving a seventh message sent by the third terminal device, where the seventh message carries the information about the second terminal device.

In a possible implementation, a message type of the seventh message is one of the following message types: a DCR message, a DCA message, a security mode command message, or a security mode complete message.

In a possible implementation, the second message carries the second identifier.

In a possible implementation, the first message further carries the second identifier, the second message carries the second identifier and the first identifier, and the first message is the same as the second message. Before the sending a first message to a third terminal device, the method further includes: receiving a ninth message from the third terminal device, where the ninth message carries the second identifier.

In a possible implementation, a message type of the ninth message is a radio resource control RRC message.

In a possible implementation, the second message carries the second identifier, the second identifier is the same as the first identifier, and the first message is the same as the second message.

In a possible implementation, the first identifier is located in an adaptation layer header of the first message.

In a possible implementation, a specific implementation of sending the first message to the third terminal device is: sending the first message to the third terminal device through a preset sidelink radio link control protocol RLC channel.

According to a third aspect, this application provides a communication method, applied to a second terminal device. The method includes: receiving a second message sent by a third terminal device, where the second message is obtained based on a first message of a first terminal device, the first message carries a first identifier, and the first identifier indicates the second terminal device. For beneficial effects of the third aspect and the possible implementations of the third aspect, refer to the descriptions in the first aspect. Details are not described herein.

In a possible implementation, the second message carries a second identifier and/or the first identifier, and the second identifier indicates the first terminal device.

In a possible implementation, a message type of the first message and a message type of the second message both are one of the following types: a direct communication request DCR message, a direct communication accept DCA message, a security mode command message, or a security mode complete message.

In a possible implementation, the method further includes: sending a fourth message to the third terminal device, where the fourth message carries the second identifier.

In a possible implementation, a message type of the fourth message is one of the following types: a DCR message, a DCA message, a security mode command message, a security mode complete message, a solicitation message, or a response message.

In a possible implementation, the method further includes: receiving a sixth message from the third terminal device, where the sixth message carries the second identifier and information about the first terminal device, and the sixth message is used to determine a correspondence between the second identifier and the first terminal device.

In a possible implementation, a message type of the sixth message is one of the following types: a DCR message, a DCA message, a security mode command message, a security mode complete message, a solicitation message, a response message, or an announcement message.

In a possible implementation, the method further includes: receiving an eighth message from the third terminal device, where the eighth message carries the information about the first terminal device; and generating the second identifier based on the information about the first terminal device.

In a possible implementation, a message type of the eighth message is one of the following types: a DCR message, a DCA message, a security mode command message, or a security mode complete message.

In a possible implementation, the second message carries the second identifier.

In a possible implementation, the first message further carries the second identifier, the second message carries the second identifier and the first identifier, and the first message is the same as the second message. Before the receiving a second message sent by a third terminal device, the method further includes: receiving a tenth message from the third terminal device, where the tenth message carries the first identifier.

In a possible implementation, a message type of the tenth message is a radio resource control RRC message.

In a possible implementation, the second message carries the second identifier, the second identifier is the same as the first identifier, and the first message is the same as the second message.

In a possible implementation, the first identifier is located in an adaptation layer header of the first message.

In a possible implementation, a specific implementation of receiving the second message sent by the third terminal device is: receiving, through a preset sidelink radio link control protocol RLC channel, the second message sent by the third terminal device.

According to a fourth aspect, this application provides a communication method, applied to a third terminal device. The method includes: receiving and forwarding a DCR message from a first terminal device, where the DCR message carries information about a second terminal device; receiving a DCA message from the second terminal device; and sending a seventh message to the first terminal device, where the seventh message carries the information about the second terminal device, and the seventh message indicates the first terminal device to establish a unicast connection to the second terminal device via the third terminal device.

According to the method described in the fourth aspect, when the first terminal device needs to establish unicast connections to a plurality of other terminal devices, the first terminal device can determine, based on the information about the second terminal device carried in the seventh message from the third terminal device, that the third terminal device is a relay device between the first terminal device and the second terminal device, and can communicate with the second terminal device through a unicast connection between the third terminal device and the second terminal device.

In a possible implementation, a message type of the seventh message is one of the following types: a DCA message, a security mode complete message, or a radio resource control RRC message.

In a possible implementation, the DCR message further carries information about the first terminal device. Based on this implementation, the second terminal device can determine that the DCR message is from the first terminal device, and also determines that the second terminal device can establish a unicast connection to the first terminal device via the third terminal device, to perform communication.

In a possible implementation, the method further includes: sending an eighth message to the second terminal device, where the eighth message carries the information about the first terminal device. Based on this implementation, the second terminal device can determine that the third terminal device is a relay device between the second terminal device and the first terminal device, and can communicate with the first terminal device through a unicast connection between the third terminal device and the first terminal device.

In a possible implementation, a message type of the eighth message is a security mode command message or an RRC message.

According to a fifth aspect, this application provides a communication method, applied to a first terminal device. The method includes: sending a DCR message, where the DCR message carries information about a second terminal device; and receiving a seventh message from a third terminal device, where the seventh message carries the information about the second terminal device, and the seventh message indicates the first terminal device to establish a unicast connection to the second terminal device via the third terminal device. For beneficial effects of the fifth aspect and the possible implementations of the fifth aspect, refer to the descriptions in the fourth aspect. Details are not described herein.

In a possible implementation, a message type of the seventh message is one of the following types: a DCA message, a security mode complete message, or an RRC message.

In a possible implementation, the DCR message further carries information about the first terminal device.

According to a sixth aspect, this application provides a communication method, applied to a second terminal device. The method includes: receiving an eighth message sent by a third terminal device, where the eighth message carries information about a first terminal device. For beneficial effects of the fifth aspect and the possible implementations of the fifth aspect, refer to the descriptions in the third aspect. Details are not described herein.

In a possible implementation, a message type of the eighth message is one of a DCR message, a security mode command message, or an RRC message.

According to a seventh aspect, this application provides a communication apparatus. The apparatus may be one of a first terminal device, a second terminal device, or a third terminal device, an apparatus of one of the first terminal device, the second terminal device, or the third terminal device, or an apparatus that can be used together with one of the first terminal device, the second terminal device, or the third terminal device. The communication apparatus may alternatively be a chip system. The communication apparatus may perform the method in the first aspect, the second aspect, the third aspect, the fourth aspect, the fifth aspect, or the sixth aspect and any one of the possible implementations thereof. A function of the communication apparatus may be implemented by hardware, or may be implemented by executing corresponding software by hardware. The hardware or software includes one or more units or modules corresponding to the foregoing function. The unit or module may be software and/or hardware. For operations performed by the communication apparatus and beneficial effects, refer to the beneficial effects corresponding to the method in the first aspect, the second aspect, the third aspect, the fourth aspect, the fifth aspect, or the sixth aspect and the possible implementations thereof. Repeated parts are not described again.

According to an eighth aspect, this application provides a communication apparatus. The communication apparatus includes a processor. When the processor invokes a computer program in a memory, the method in the first aspect, the second aspect, the third aspect, the fourth aspect, the fifth aspect, or the sixth aspect and the possible implementations thereof are performed.

According to a ninth aspect, this application provides a communication apparatus. The communication apparatus includes a processor and a memory. The processor is coupled to the memory, and the processor is configured to implement the method in the first aspect, the second aspect, the third aspect, the fourth aspect, the fifth aspect, or the sixth aspect and the possible implementations thereof.

According to a tenth aspect, this application provides a communication apparatus. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus, and the processor is configured to implement the method in the first aspect, the second aspect, the third aspect, the fourth aspect, the fifth aspect, or the sixth aspect and the possible implementations thereof by using a logic circuit or executing code instructions.

According to an eleventh aspect, this application provides a computer-readable storage medium. The storage medium stores a computer program or instructions. When the computer program or the instructions are executed by a communication apparatus, the method in any one of the first aspect, the second aspect, the third aspect, the fourth aspect, the fifth aspect, or the sixth aspect and the possible implementations thereof are implemented.

According to a twelfth aspect, this application provides a computer program product including instructions. When a computer reads and executes the computer program product, the computer is enabled to perform the method in the first aspect, the second aspect, the third aspect, the fourth aspect, the fifth aspect, or the sixth aspect and the possible implementations thereof.

### BRIEF DESCRIPTION OF DRAWINGS

FIG. 1 is a diagram of a communication structure between UEs according to an embodiment of this application;
FIG. 2 is a diagram of a user plane protocol architecture according to an embodiment of this application;
FIG. 3 is a schematic flowchart of UE-to-UE relay discovery and selection integrated in unicast connection establishment according to an embodiment of this application;
FIG. 4 is a schematic flowchart of UE-to-UE relay discovery and selection integrated in model B direct discovery according to an embodiment of this application;
FIG. 5 is a schematic flowchart of model A-based unicast connection establishment of UE-to-UE relay according to an embodiment of this application;
FIG. 6 is a diagram of a communication system according to an embodiment of this application;
FIG. 7 is a schematic flowchart of a communication method according to an embodiment of this application;
FIG. 8 is a diagram of another communication structure between UEs according to an embodiment of this application;
FIG. 9 is a schematic flowchart of another communication method according to an embodiment of this application;
FIG. 10 is a diagram of a structure of a communication apparatus according to an embodiment of this application;
FIG. 11 is a diagram of a structure of another communication apparatus according to an embodiment of this application; and
FIG. 12 is a diagram of a structure of a chip according to an embodiment of this application.

### DESCRIPTION OF EMBODIMENTS

The following further describes specific embodiments of this application in detail with reference to accompanying drawings.

"Embodiments" mentioned herein mean that specific features, structures, or characteristics described in combination with embodiments may be included in at least one embodiment of this application. The phrase shown in various locations in the specification does not necessarily mean a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two or three or more. The term "and/or" is used to describe an association relationship between associated objects and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

To better understand embodiments of this application, the following first describes related concepts in embodiments of this application.

### I. Sidelink (Sidelink) communication

In a wireless communication system, a user equipment (user equipment, UE) can directly communicate with a UE without using a network device, and a link between UEs is referred to as a sidelink. An interface between UEs is referred to as a PC5 interface. A typical application scenario of sidelink communication is vehicle-to-everything (Vehicle-to-everything, V2X). In vehicle-to-everything, each vehicle is a UE, and data transmission can be directly performed between UEs through a sidelink without using a network. In this way, a communication latency can be effectively reduced.

### II. User equipment-to-user equipment relay (UE-to-UE Relay, U2U Relay) communication

A manner in which a source terminal performs discovery or communication with a target terminal via a relay (Relay) terminal is referred to as UE-to-UE relay communication. Sidelink coverage enhancement (for example, a coverage signal between the source terminal and the target terminal is poor or the source terminal and the target terminal are out of coverage) or a capacity (for example, the relay terminal is a device with a strong capability) may be improved for the source terminal and the target terminal via the relay terminal. In a layer 2 (Layer 2) based relay communication mode, user plane data is relayed and forwarded below a packet data convergence protocol (Packet Data Convergence Protocol, PDCP) layer on a relay terminal side. In this case, a user plane protocol stack is shown in FIG. 2. In a protocol architecture, an adaptation layer (Adaptation layer) is added between a radio link control (Radio Link Control, RLC) protocol layer and a PDCP layer. A main function of the adaptation layer is bearer multiplexing and demultiplexing. To be specific, the adaptation layer supports multiplexing of different bearers onto one bearer or splitting of one bearer into different bearers, and is used to distinguish between different terminals.

### III. Relay terminal discovery

When a source terminal needs to perform data transmission with a target terminal, the target terminal may not be within coverage of the source terminal. In this case, the source terminal needs to discover and select a relay terminal for connection, and perform data transmission with the target terminal via the relay terminal. Two relay terminal discovery methods are defined in a protocol.

Model A (Model A): The relay terminal broadcasts an announcement (Announcement) message to a surrounding terminal, where the announcement message mainly notifies the surrounding terminal of a location of the relay terminal, so that a surrounding terminal discovers the relay terminal.

Model B (Model B): The source terminal broadcasts a solicitation (Solicitation) message to a surrounding terminal, and if there is a surrounding relay terminal that meets a requirement of the source terminal, the relay terminal returns a response (Response) message to the source terminal.

### IV. Unicast connection establishment of U2U relay

That a source terminal establishes a unicast connection to a target terminal via a relay terminal may include the following three implementations.

### 1. UE-to-UE relay discovery and selection integrated in unicast connection establishment

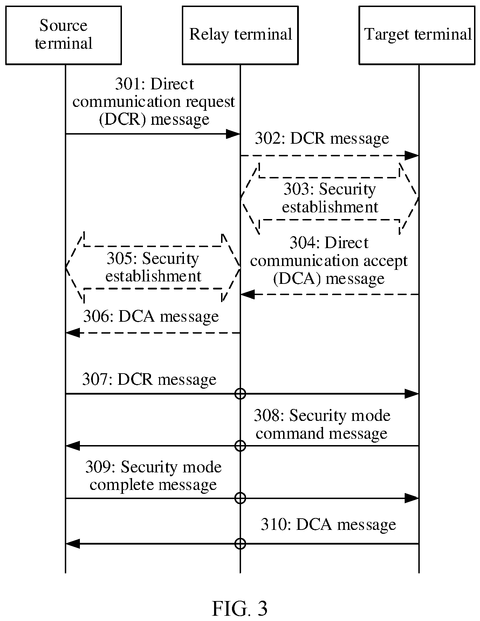

FIG. 3 is a schematic flowchart of UE-to-UE relay discovery and selection integrated in unicast connection establishment.

301: A source terminal broadcasts a direct communication request (Direct Communication Request, DCR) message. Correspondingly, a relay terminal receives the DCR message sent by the source terminal.

The DCR message carries information about a target terminal. For example, the information may be an application layer identifier (application layer identifier, APP ID) of the target terminal. The DCR message mainly requests to discover the target terminal and indicates that the source terminal requests to establish a unicast connection to a relay terminal that finds the target terminal.

302: The relay terminal broadcasts the DCR message. Correspondingly, the target terminal receives the DCR message from the relay terminal.

After receiving the DCR message sent by the source terminal, the relay terminal determines to serve as a relay to help the source terminal forward the DCR message, allocates an L2 address, uses the L2 address as a source L2 address of the DCR message, and sends the DCR message in a broadcast manner. The DCR message mainly requests to discover the target terminal.

303: The target terminal establishes a security connection (Security Establishment) to the relay terminal.

A specific procedure in which the target terminal establishes the security connection (security establishment) to the relay terminal may be as follows:
Step 1: The target terminal sends a security mode command (security mode command) message to the relay terminal.
   The security mode command message indicates that the target terminal requests to establish the security connection to the relay terminal.
Step 2: After receiving the security mode command message, the relay terminal sends a security mode complete (security mode complete) message to the target terminal.

The security mode complete message indicates that establishment of the security connection between the target terminal and the relay terminal is completed.

304: The target terminal sends a direct communication accept (Direct Communication Accept, DCA) message to the relay terminal. Correspondingly, the relay terminal receives the DCA message from the target terminal.

After receiving the DCR message from the relay terminal, the target terminal may determine, based on the information about the target terminal carried in the DCR message, that the DCR message is for the target terminal. Therefore, the target terminal returns the DCA message to the relay terminal. It should be noted that, if the target terminal receives DCR messages of a plurality of relay terminals, the target terminal selects an optimal relay terminal to return the DCA message. The DCA message also indicates that establishment of the unicast connection between the target terminal and the relay terminal is completed.

If there has been a unicast connection between the target terminal and the relay terminal before, step 302 to step 304 may not need to be performed.

305: The source terminal establishes a security connection to the relay terminal.

A security establishment manner between the source terminal and the relay terminal is similar to that in step 303. A specific procedure may be as follows:
Step 1: The relay terminal sends a security mode command message to the source terminal.
   The security mode command message indicates that the relay terminal requires the source terminal to establish the security connection.
Step 2: After receiving the security mode command message, the source terminal sends a security mode complete message to the relay terminal.

The security mode complete message indicates that establishment of the security connection between the source terminal and the relay terminal is completed.

306: The relay terminal sends a DCA message to the source terminal. Correspondingly, the relay terminal receives the DCA message from the source terminal, where the DCA message indicates that establishment of a unicast connection link between the source terminal and the relay terminal is completed. If there has been a unicast connection link between the source terminal and the relay terminal before, step 305 and step 306 may not need to be performed. The DCA message indicates that establishment of the unicast connection link between the source terminal and the relay terminal is completed.

307: The source terminal sends a DCR message to the target terminal via the relay terminal.

The DCR message indicates that the source terminal requests to establish an end-to-end unicast connection to the target terminal.

308: The target terminal sends a security mode command message to the source terminal via the relay terminal.

The security mode command message indicates that the target terminal requires to establish a security connection to the source terminal.

309: The source terminal sends a security mode complete message to the target terminal via the relay terminal.

The security mode complete message indicates that establishment of the security connection between the source terminal and the target terminal is completed.

310: The target terminal sends a DCA message to the source terminal via the relay terminal.

The DCA message indicates that establishment of an end-to-end unicast connection link between the source terminal and the target terminal is completed.

Step 307 to step 310 are a process in which the source terminal establishes the end-to-end unicast connection to the target terminal.

### 2. UE-to-UE relay discovery and selection integrated in model B direct discovery

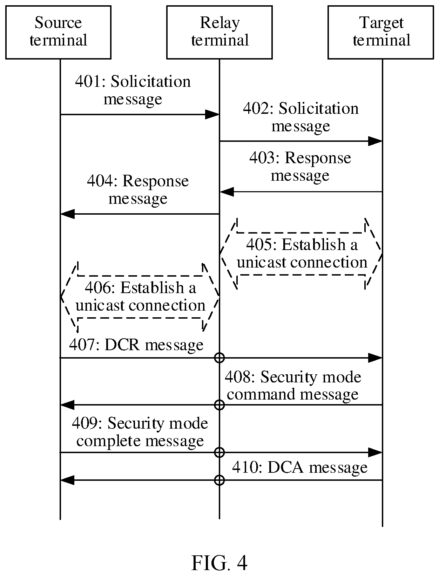

FIG. 4 is a schematic flowchart of UE-to-UE relay discovery and selection integrated in model B direct discovery.

401: A source terminal broadcasts a solicitation message. Correspondingly, a relay terminal receives the solicitation message sent by the source terminal.

The solicitation message mainly requests to discover a target terminal. The solicitation message carries information about the source terminal and information about the target terminal. Optionally, the information about the source terminal may be an APP ID of the source terminal, and the information about the target terminal may be an APP ID of the target terminal.

402: The relay terminal broadcasts a solicitation message. Correspondingly, the target terminal receives the broadcast solicitation message from the relay terminal.

After receiving the solicitation message sent by the source terminal, the relay terminal determines to serve as a relay to help broadcast the solicitation message. The broadcast solicitation message includes the information about the source terminal, information about the relay terminal, and the information about the target terminal. The relay terminal allocates an L2 address to the relay terminal, and uses the L2 address as a source L2 address of the broadcast solicitation message.

403: The target terminal sends a response message to the relay terminal.

After receiving the solicitation message, the target terminal determines that the information about the target terminal carried in the solicitation message matches the target terminal, returns the response message to the relay terminal, and uses the source L2 address of the relay terminal as a destination L2 address of the response message.

404: The relay terminal sends a response message to the source terminal.

The response message includes the information about the source terminal, the information about the relay terminal, and the information about the target terminal. The source terminal may receive response messages sent by a plurality of relay terminals. In this case, the source terminal selects, based on a parameter such as link quality, one relay terminal from the plurality of relay terminals that send the response messages as a relay between the source terminal and the target terminal.

405: The relay terminal establishes a unicast connection to the target terminal.

A procedure in which a terminal 1 establishes a unicast connection to a terminal 2 is as follows:
Step 1: The terminal 1 sends a DCR message to the terminal 2.
Step 2: The terminal 2 sends a security mode command message to the terminal 1.
Step 3: The terminal 1 sends a security mode complete message to the terminal 2.
Step 4: The terminal 2 sends a DCA message to the terminal 1.

A procedure in which the relay terminal establishes the unicast connection to the target terminal is the same as the foregoing described procedure in which the terminal 1 establishes the unicast connection to the terminal 2. It should be noted that, if a unicast connection link between the relay terminal and the target terminal has been established before, step 405 may not need to be performed.

406: The source terminal establishes a unicast connection to the relay terminal.

A manner in which the source terminal establishes the unicast connection to the relay terminal is the same as the procedure in which the terminal 1 establishes the unicast connection to the terminal 2 described in step 405. Details are not described herein in this embodiment of this application. It should be noted that, if a unicast connection link between the source terminal and the relay terminal has been established before, step 406 may not need to be performed.

407: The source terminal sends a DCR message to the target terminal via the relay terminal.

408: The target terminal sends a security mode command message to the source terminal via the relay terminal.

409: The source terminal sends a security mode complete message to the target terminal via the relay terminal.

410: The target terminal sends a DCA message to the source terminal via the relay terminal.

Step 407 to step 410 are a process in which the source terminal establishes an end-to-end unicast connection to the target terminal, and specific implementations of step 407 to step 410 are the same as those of step 307 to step 310. Details are not described herein in this embodiment of this application.

### 3. Model A-based unicast connection establishment of UE-to-UE relay

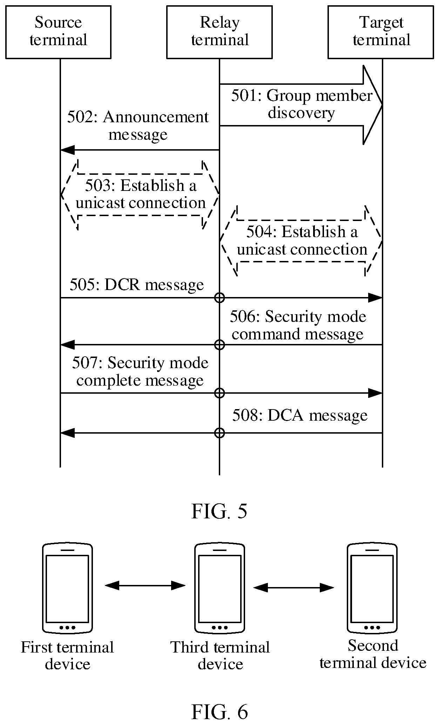

FIG. 5 is a schematic flowchart of model A-based unicast connection establishment of UE-to-UE relay.

501: A relay terminal performs a group member discovery (Group Member Discovery) step.

The group member discovery step may be implemented by using the model A or the model B described in the foregoing relay terminal discovery methods. Specifically, the relay terminal may broadcast an announcement message to a surrounding terminal, to allow the surrounding terminal to discover the relay terminal, and receive a response from the surrounding terminal. Alternatively, another terminal may broadcast a solicitation message, and the relay terminal receives the solicitation message broadcast by the terminal. Alternatively, the relay terminal may receive an announcement message broadcast by a surrounding terminal. Alternatively, the relay terminal may broadcast a solicitation message to a surrounding terminal, and receive a reply from the surrounding terminal. The relay terminal determines, based on terminals that have unicast connections to the relay terminal and the group member discovery step, terminals that can communicate with the relay terminal, and generates a terminal information list, where a target terminal is a terminal in the terminal information list.

502: The relay terminal periodically broadcasts an announcement message (Announcement message). Correspondingly, a source terminal receives the announcement message from the relay terminal. The announcement message includes information about the relay terminal, the terminal information list, and the like. The target terminal information list includes the plurality of terminals, determined in step 501, that can communicate with the relay terminal.

503: The source terminal establishes a unicast connection to the relay terminal.

The source terminal may receive announcement messages from a plurality of relay terminals, where the announcement message includes a target terminal with which the source terminal expects to communicate, and may select one relay terminal from the plurality of relay terminals. Before performing end-to-end communication, the source terminal and the target terminal each need to establish a unicast connection link with the relay terminal.

A manner in which the source terminal establishes the unicast connection to the relay terminal is the same as the procedure in which the terminal 1 establishes the unicast connection to the terminal 2 described in step 305. Details are not described herein in this embodiment of this application. It should be noted that, if a unicast connection link between the source terminal and the relay terminal has been established before, step 503 may not need to be performed.

504: The relay terminal establishes a unicast connection to the target terminal.

A manner in which the relay terminal establishes the unicast connection to the target terminal is the same as the procedure in which the terminal 1 establishes the unicast connection to the terminal 2 described in step 305. Details are not described herein in this embodiment of this application. It should be noted that, if a unicast connection link between the relay terminal and the target terminal has been established before, step 504 may not need to be performed.

505: The source terminal sends a DCR message to the target terminal via the relay terminal.

506: The target terminal sends a security mode command message to the source terminal via the relay terminal.

507: The source terminal sends a security mode complete message to the target terminal via the relay terminal.

508: The target terminal sends a DCA message to the source terminal via the relay terminal.

Step 505 to step 508 are a process in which the source terminal establishes an end-to-end unicast connection to the target terminal, and specific implementations of step 505 to step 508 are the same as those of step 307 to step 310. Details are not described herein in this embodiment of this application.

The following describes a system architecture in embodiments of this application.

A method provided in this application may be applied to various communication systems, for example, an internet of things (internet of things, IoT) system, a narrowband internet of things (narrowband internet of things, NB-IoT) system, a long term evolution (long term evolution, LTE) system, a 5th generation (5th generation, 5G) communication system, an LTE and 5G hybrid architecture, a 5G new radio (new radio, NR) system, and a new communication system emerging in future communication development.

FIG. 6 is a diagram of a communication system according to an embodiment of this application. Solutions in this application are applicable to the communication system. The communication system includes at least one first terminal device, at least one second terminal device, and at least one third terminal device. In FIG. 6, an example in which the communication system includes one first terminal device, one second terminal device, and one third terminal device is used. The first terminal device may communicate with the third terminal device through a sidelink, and the second terminal device may also communicate with the third terminal device through a sidelink. The third terminal device may be used as a relay between the first terminal device and the second terminal device. The first terminal device sends information to the third terminal device, so that the third terminal device forwards the information to the second terminal device, to implement communication between the first terminal device and the second terminal device. The same applies to the second terminal device. The communication system may further include other terminal devices. Each of the other terminal devices may communicate with the first terminal device, the second terminal device, or the third terminal device through a sidelink. A quantity of terminal devices in the communication system is not limited in this embodiment of this application. The first terminal device, the second terminal device, and the third terminal device may all be in a radio resource control (Radio Resource Control, RRC) connected state, an RRC idle state, an RRC inactive state, or an out of coverage (out of coverage, OOC) state. States of the first terminal device, the second terminal device, and the third terminal device are not limited in this embodiment of this application.

The terminal device in embodiments of this application may also be referred to as a terminal for short, and is an entity configured to receive or transmit a signal on a user side. The terminal device may be a device that provides voice and/or data connectivity for a user, for example, a handheld device or a vehicle-mounted device with a wireless connection function. The terminal device may alternatively be another processing device connected to a wireless modem. The terminal device may communicate with a radio access network (radio access network, RAN). The terminal device may also be referred to as a wireless terminal, a subscriber unit (subscriber unit), a subscriber station (subscriber station), a mobile station (mobile station), a mobile (mobile) console, a remote station (remote station), an access point (access point), a remote terminal (remote terminal), an access terminal (access terminal), a user terminal (user terminal), a user agent (user agent), a user device (user device), or a UE. The terminal device may be a mobile terminal, for example, a mobile phone (or referred to as a "cellular" phone), or a computer that has a mobile terminal. For example, the terminal device may be a portable, pocket-sized, handheld, computer built-in, or vehicle-mounted mobile apparatus, which exchanges a voice and/or data with the radio access network. For example, the terminal device may alternatively be a device such as a personal communications service (personal communications service, PCS) phone, a cordless phone, a session initiation protocol (session initiation protocol, SIP) phone, a wireless local loop (wireless local loop, WLL) station, or a personal digital assistant (personal digital assistant, PDA). Common terminal devices include, for example, a mobile phone, a tablet computer, a notebook computer, a palmtop computer, a mobile internet device (mobile internet device, MID), and a wearable device, such as a smartwatch, a smart band, or a pedometer. However, embodiments of this application are not limited thereto.

Based on the foregoing descriptions of U2U relay communication, to allow a relay terminal to receive and forward a message, when a source terminal sends the message to a target terminal, a layer 2 identifier (layer 2 ID, L2 ID) of the relay terminal is filled as a destination address. The U2U relay communication further includes an M:N network topology scenario. The network topology scenario includes a plurality of source terminals, a plurality of target terminals, and one relay terminal. Communication between the plurality of source terminals and the plurality of target terminals needs to be performed via the relay terminal. In the U2U relay M:N network topology scenario, when the source terminal establishes unicast communication connections to the plurality of target terminals via the relay terminal, after the relay terminal receives a message sent by the source terminal, the relay terminal may not know a specific target terminal to which the message should be forwarded.

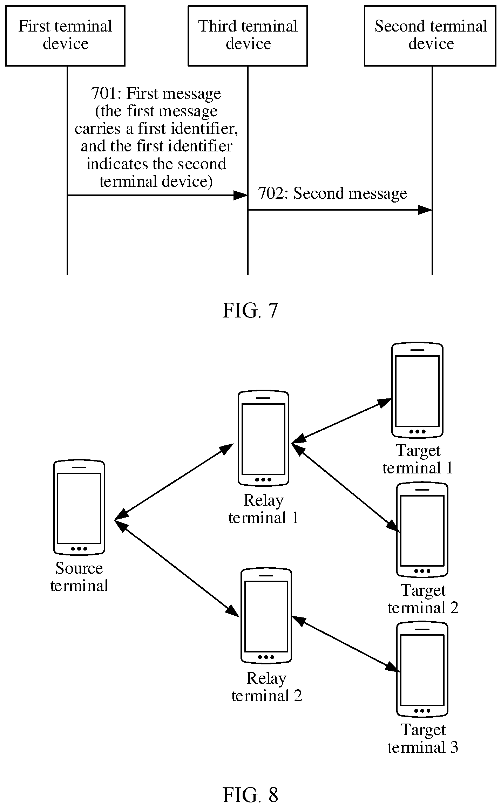

To allow the relay terminal to determine a specific UE to which a currently received message should be forwarded, and ensure normal communication in a U2U relay scenario, this application provides a communication method. Refer to FIG. 7. FIG. 7 is a schematic flowchart of a communication method according to an embodiment of this application. As shown in FIG. 7, the communication method includes the following step 701 and step 702. The method shown in FIG. 7 may be performed by a first terminal device, a second terminal device, and a third terminal device, or may be performed by a chip in the first terminal device, a chip in the second terminal device, or a chip in the third terminal device. In FIG. 2, an example in which the method is performed by the first terminal device, the second terminal device, and the third terminal device is used for description. An execution body of the communication method is not limited in this embodiment of this application.

701: The first terminal device sends a first message to the third terminal device. Correspondingly, the third terminal device receives the first message from the first terminal device. The first message carries a first identifier, and the first identifier indicates the second terminal device.

In this embodiment of this application, a unicast connection is established between the first terminal device and the third terminal device, a unicast connection is also established between the second terminal device and the third terminal device, and the third terminal device is a relay device between the first terminal device and the second terminal device. In correspondence to the foregoing descriptions of U2U relay communication, the first terminal device may be a source terminal, the second terminal device may be a target terminal, and the third terminal device may be a relay terminal between the source terminal and the target terminal. Alternatively, the first terminal device may be a target terminal, and the second terminal device may be a source terminal. This is not limited in this embodiment of this application. The first terminal device and the second terminal device may communicate with each other via the third terminal device.

The first terminal device sends the first message to the third terminal device, so that the third terminal device can transfer content in the first message to the second terminal device, to implement mutual communication between the first terminal device and the second terminal device. The first message further carries the first identifier, and the first identifier indicates the second terminal device. After receiving the first message, the third terminal device may obtain the first identifier in the first message, and determine that the first terminal device expects to transfer the content in the first message to the second terminal device via the third terminal device. Therefore, the first identifier can be used by the third terminal device to determine, when the third terminal device receives the first message, that the content in the first message should be transferred to the second terminal device. Based on this implementation, the relay terminal can determine, in a U2U relay M:N network topology scenario, a specific terminal device to which a received message should be forwarded. This helps ensure normal communication in a U2U relay scenario.

Optionally, the first identifier may be an L2 ID of the second terminal device, or the first identifier may be a local ID (Local ID) of the second terminal device. Further, optionally, the first identifier is located in an adaptation layer header of the first message. It should be noted that the first identifier may alternatively be another identifier, and similarly, may alternatively be located in a packet header at another layer. This is not limited in this embodiment of this application.

In a possible implementation, the first message may be a message transmitted in a process in which the first terminal device establishes a unicast connection to the second terminal device. In this case, the first terminal device has established the unicast connection to the third terminal device, and the second terminal device has also established the unicast connection to the third terminal device. Optionally, a message type of the first message may be one of the following message types: a DCR message, a DCA message, a security mode command message, or a security mode complete message.

In correspondence to the foregoing described three implementations of unicast connection establishment of U2U relay:
If the first implementation, to be specific, UE-to-UE relay discovery and selection integrated in unicast connection establishment, is used, the first message may be a message sent by the source UE or the target terminal to the target terminal or the source UE via the relay terminal in any one of step 307 to step 310. For example, it is assumed that the first terminal device is the source terminal, the second terminal device is the target terminal, and the third terminal device is the relay terminal. In this case, the first message may be the DCR message sent by the source terminal to the relay terminal in step 307.

If the second implementation, to be specific, UE-to-UE relay discovery and selection integrated in model B direct discovery, is used, the first message may be a message sent by the source UE or the target terminal to the target terminal or the source UE via the relay terminal in any one of step 407 to step 410. For example, it is assumed that the first terminal device is the source terminal, the second terminal device is the target terminal, and the third terminal device is the relay terminal. In this case, the first message may be the DCR message sent by the source terminal to the relay terminal in step 407.

If the third implementation, to be specific, model A-based unicast connection establishment of UE-to-UE relay, is used, the first message may be a message sent by the source UE or the target terminal to the target terminal or the source UE via the relay terminal in any one of step 505 to step 508. For example, it is assumed that the first terminal device is the source terminal, the second terminal device is the target terminal, and the third terminal device is the relay terminal. In this case, the first message may be the DCR message sent by the source terminal to the relay terminal in step 505.

In another possible implementation, the first message may be a message sent by the first terminal device to the second terminal device via the third terminal device after the first terminal device establishes a unicast connection to the second terminal device. In this case, the first message may be of any message type, for example, a PC5-RRC message or a PC5 signaling (PC5 Signaling, PC5-S) message. This is not limited in this embodiment of this application.

To allow the third terminal device to determine that the first identifier in the first message indicates the second terminal device, before step 701, the third terminal device needs to establish a correspondence between the first identifier and the second terminal device. Specifically, there are two implementations.

Manner 1: The first identifier is allocated by the first terminal device to the second terminal device. Correspondingly, the second terminal device also allocates a second identifier to the first terminal device, and the second identifier indicates the first terminal device.

Specifically, the first terminal device sends a third message to the third terminal device. Correspondingly, the third terminal device receives the third message from the first terminal device, where the third message carries the first identifier. The second terminal device sends a fourth message to the third terminal device. Correspondingly, the third terminal device receives the fourth message from the second terminal device, where the fourth message carries the second identifier, and the second identifier indicates the first terminal device. The first identifier (the second identifier) helps the third terminal device determine, when the third terminal device receives a message sent by the first terminal device (the second terminal device), that content in the message should be transferred to a specific terminal device. Based on this implementation, the third terminal device can determine, in the U2U relay M:N network topology scenario, a specific terminal device to which a received message should be forwarded. This helps ensure normal communication in the U2U relay scenario.

Similar to the first identifier, optionally, the foregoing described second identifier may be an L2 ID of the first terminal device, or the second identifier may be a local ID of the first terminal device. Further, optionally, the second identifier is located in an adaptation layer header of the fourth message. It should be noted that the second identifier may alternatively be another identifier, and similarly, may alternatively be located in a packet header at another layer. This is not limited in this embodiment of this application. The same applies to the first identifier and the second identifier described subsequently, and details are not described again.

Optionally, a message type of the third message and/or a message type of the fourth message are/is one of the following types: a DCR message, a DCA message, a security mode command message, a security mode complete message, a solicitation message, or a response message.

In correspondence to the foregoing described three implementations of unicast connection establishment of U2U relay:
If the first implementation, to be specific, UE-to-UE relay discovery and selection integrated in unicast connection establishment, is used, the third message and/or the fourth message may be messages/a message sent by the source terminal or the target terminal to the relay terminal in step 301, step 303, step 304, or step 305. Specifically, the message type of the third message and/or the message type of the fourth message are/is one of the following types: a DCR message, a DCA message, a security mode command message, and a security mode complete message. In this case, the third message and the fourth message are not messages of a same type. For example, it is assumed that the first terminal device is the source terminal, the second terminal device is the target terminal, and the third terminal device is the relay terminal. In this case, the third message may be the DCR message sent by the source terminal to the relay terminal in step 301, where the DCR message carries the first identifier, and the fourth message may be the DCA message sent by the target terminal to the relay terminal in step 304, where the DCA message carries the second identifier. It is assumed that the first identifier is a local ID of the target terminal, and the second identifier is a local ID of the source terminal. In this case, after unicast establishment between the target terminal and the source terminal is completed, if the source terminal (the target terminal) expects to send a message to the target terminal (the source terminal) via the relay terminal, the local ID of the target terminal (the source terminal) only needs to be carried in the message. After receiving the message, the relay terminal may know, based on the local ID, a device to which the message should be sent.

If the second implementation, to be specific, UE-to-UE relay discovery and selection integrated in model B direct discovery, is used, the third message and/or the fourth message may be messages/a message sent by the source terminal or the target terminal to the relay terminal in step 401, step 403, step 405, or step 406. Specifically, the message type of the third message and/or the message type of the fourth message are/is one of the following types: a solicitation message, a response message, a DCR message, a DCA message, a security mode command message, or a security mode complete message. In this case, the third message and the fourth message are not messages of a same type. For example, it is assumed that the first terminal device is the source terminal, the second terminal device is the target terminal, and the third terminal device is the relay terminal. In this case, the third message may be the solicitation message sent by the source terminal to the relay terminal in step 401, where the solicitation message carries the first identifier, and the fourth message may be the response message sent by the target terminal to the relay terminal in step 404, where the response carries the second identifier. It is assumed that the first identifier is an L2 ID of the target terminal, and the second identifier is an L2 ID of the source terminal. In this case, after unicast establishment between the target terminal and the source terminal is completed, if the source terminal (the target terminal) expects to send a message to the target terminal (the source terminal) via the relay terminal, the L2 ID of the target terminal (the source terminal) only needs to be carried in the message. After receiving the message, the relay terminal may know, based on the L2 ID, a device to which the message should be sent.

If the third implementation, to be specific, model A-based unicast connection establishment of UE-to-UE relay, is used, the third message and/or the fourth message may be messages/a message sent by the source terminal or the target terminal to the relay terminal in step 503 or step 504. Specifically, the message type of the third message and/or the message type of the fourth message are/is one of the following types: a DCR message, a DCA message, a security mode command message, or a security mode complete message. In this case, the third message and the fourth message are not messages of a same type. For example, it is assumed that the first terminal device is the source terminal, the second terminal device is the target terminal, and the third terminal device is the relay terminal. In this case, the third message may be the DCR message sent by the source terminal to the relay terminal in step 503, where the DCR message carries the first identifier, and the fourth message may be the DCA message sent by the target terminal to the relay terminal in step 504, where the DCA carries the second identifier. It is assumed that the first identifier is a local ID of the target terminal, and the second identifier is a local ID of the source terminal. In this case, after unicast establishment between the target terminal and the source terminal is completed, if the source terminal (the target terminal) expects to send a message to the target terminal (the source terminal) via the relay terminal, the local ID of the target terminal (the source terminal) only needs to be carried in the message. After receiving the message, the relay terminal may know, based on the local ID, a device to which the message should be sent.

Optionally, the third message and/or the fourth message may alternatively be of message types/a message type other than the foregoing message types. For example, the third message and/or the fourth message may be PC5-RRC messages/a PC5-RRC message or PC5-S messages/a PC5-S message, or the third message and/or the fourth message may be messages of new types/a message of a new type. This is not limited in this embodiment of this application.

In correspondence to the third implementation, to be specific, model A-based unicast connection establishment of UE-to-UE relay, in the foregoing described implementations of unicast connection establishment of U2U relay, it is assumed that the first terminal device is the source terminal, the second terminal device is the target terminal, and the third terminal device is the relay terminal. In this case, the fifth message may be a PC5-RRC message or a PC5-S message sent by the source terminal to the relay terminal after step 503, and the sixth message may be a PC5-RRC message or a PC5-S message sent by the target terminal to the relay terminal after step 504.

A message type of one of the third message and the fourth message may be a PC5-RRC message or a PC5-S message, a message type of the other message is one of the foregoing described DCR message, DCA message, security mode command message, security mode complete message, solicitation message, or response message.

Manner 2: The first identifier is allocated by the third terminal device to the second terminal device. Correspondingly, the third terminal device also allocates a second identifier to the first terminal device.

Specifically, the third terminal device sends a fifth message to the first terminal device, where the fifth message carries the first identifier and information about the second terminal device. Correspondingly, the first terminal device receives the fifth message from the third terminal device, where the fifth message is used to determine a correspondence between the first identifier and the second terminal device. The third terminal device sends a sixth message to the second terminal device, where the sixth message carries the second identifier and information about the first terminal device. Correspondingly, the second terminal device receives the sixth message sent by the third terminal device, where the sixth message is used to determine a correspondence between the second identifier and the first terminal device. Optionally, the information about the first terminal device may be an APP ID of the first terminal device, and is located in an application layer packet header of the sixth message. Similarly, the information about the second terminal device may be an APP ID of the second terminal device, and is located in an application layer packet header of the fifth message. It should be noted that the information about the first terminal device may alternatively be information of another type about the first terminal device, and is located in a packet header at another layer. This is not limited in this embodiment of this application. The same applies to the information about the second terminal device. Details are not described again in this embodiment of this application. After obtaining the first identifier, the first terminal device may determine the correspondence between the first identifier and the second terminal device based on the information about the second terminal device carried in the fifth message. Subsequently, when needing to communicate with the second terminal device via the third terminal device, the first terminal device includes the first identifier indicating the second terminal device in a message. After obtaining the message sent by the first terminal device, the third terminal device may determine, based on the first identifier carried in the message, that the message needs to be forwarded to the second terminal device. Similarly, after obtaining the second identifier, the second terminal device determines the correspondence between the second identifier and the first terminal device. When communicating with the first terminal device via the third terminal device, the second terminal device includes the second identifier in a message, to indicate that the message needs to be sent to the first terminal device. Based on this implementation, the third terminal device can determine, in the U2U relay M:N network topology scenario, a specific terminal device to which a received message should be forwarded. This helps ensure normal communication in the U2U relay scenario.

Optionally, a message type of the fifth message and/or a message type of the sixth message are/is one of the following types: a DCR message, a DCA message, a security mode command message, a security mode complete message, a solicitation message, a response message, or an announcement message.

In correspondence to the foregoing described implementations of unicast connection establishment of U2U relay:
If the first implementation, to be specific, UE-to-UE relay discovery and selection integrated in unicast connection establishment, is used, the fifth message and/or the sixth message may be messages/a message sent by the relay terminal to the source terminal or the target terminal in step 302, step 303, step 305, or step 306. Specifically, the message type of the fifth message and/or the message type of the sixth message are/is one of the following types: a DCR message, a DCA message, a security mode command message, and a security mode complete message. In this case, the fifth message and the sixth message are not messages of a same type. For example, it is assumed that the first terminal device is the source terminal, the second terminal device is the target terminal, and the third terminal device is the relay terminal. In this case, the fifth message may be the DCA message sent by the relay terminal to the source terminal in step 306, where the DCA message carries the first identifier and the information about the target terminal, and the sixth message may be the DCR message sent by the relay terminal to the target terminal in step 302, where the DCR message carries the second identifier and the information about the source terminal. It is assumed that the first identifier is a local ID of the target terminal, and the second identifier is a local ID of the source terminal. In this case, after unicast establishment between the target terminal and the source terminal is completed, if the source terminal (the target terminal) expects to send a message to the target terminal (the source terminal) via the relay terminal, the local ID of the target terminal (the source terminal) only needs to be carried in the message. After receiving the message, the relay terminal may know, based on the local ID, a device to which the message should be sent.

If the second implementation, to be specific, UE-to-UE relay discovery and selection integrated in model B direct discovery, is used, the fifth message and/or the sixth message may be messages/a message sent by the relay terminal to the source terminal or the target terminal in step 402, step 404, step 405, or step 406. Specifically, the message type of the fifth message and/or the message type of the sixth message are/is one of the following types: a solicitation message, a response message, a DCR message, a DCA message, a security mode command message, or a security mode complete message. In this case, the fifth message and the sixth message are not messages of a same type. For example, it is assumed that the first terminal device is the source terminal, the second terminal device is the target terminal, and the third terminal device is the relay terminal. In this case, the fifth message may be the response message sent by the relay terminal to the source terminal in step 404, where the response message carries the first identifier and the information about the target terminal, and the sixth message may be the solicitation message sent by the relay terminal to the target terminal in step 402, where the solicitation carries the second identifier and the information about the source terminal. It is assumed that the first identifier is an L2 ID of the target terminal, and the second identifier is an L2 ID of the source terminal. In this case, after unicast establishment between the target terminal and the source terminal is completed, if the source terminal (the target terminal) expects to send a message to the target terminal (the source terminal) via the relay terminal, the L2 ID of the target terminal (the source terminal) only needs to be carried in the message. After receiving the message, the relay terminal may know, based on the L2 ID, a device to which the message should be sent.

Optionally, the fifth message and/or the sixth message may alternatively be of message types/a message type other than the foregoing described message types. For example, the fifth message and/or the sixth message may be PC5-RRC messages/a PC5-RRC message or PC5-S messages/a PC5-S message, or the fifth message and/or the sixth message may be messages of new types/a message of a new type. This is not limited in this embodiment of this application.

In correspondence to the third implementation, to be specific, model A-based unicast connection establishment of UE-to-UE relay, in the foregoing described implementations of unicast connection establishment of U2U relay, it is assumed that the first terminal device is the source terminal, the second terminal device is the target terminal, and the third terminal device is the relay terminal. In this case, the fifth message may be a PC5-RRC message or a PC5-S message sent by the relay terminal to the source terminal after step 503, and the sixth message may be a PC5-RRC message or a PC5-S message sent by the relay terminal to the target terminal after step 504.

A message type of one of the fifth message and the sixth message may be a PC5-RRC message or a PC5-S message, a message type of the other message is one of the foregoing described DCR message, DCA message, security mode command message, security mode complete message, solicitation message, or response message.

Based on the foregoing two allocation manners of the first identifier, further, optionally, the third terminal device sends a seventh message to the first terminal device. Correspondingly, the first terminal device receives the seventh message sent by the third terminal device, where the seventh message carries the information about the second terminal device. The third terminal device sends an eighth message to the second terminal device. Correspondingly, the second terminal device receives the eighth message from the third terminal device, where the eighth message carries the information about the first terminal device.

It is assumed that the manner 1 in the foregoing described allocation manners of the first identifier is used, to be specific, the first identifier is allocated by the first terminal device to the second terminal device.

In this case, before the third terminal device receives the third message from the first terminal device, the third terminal device sends the seventh message to the first terminal device, where the seventh message carries the information about the second terminal device. Correspondingly, before the third terminal device receives the fourth message from the second terminal device, the third terminal device sends the eighth message to the second terminal device, where the eighth message carries the information about the first terminal device. In this implementation, the seventh message mainly indicates the first terminal device to allocate the first identifier to the second terminal device, and may also indicate the second terminal device to establish a unicast communication connection to the third terminal device, and the first terminal device may communicate with the second terminal device via the third terminal device. The same applies to the eighth message, and details are not described again. Therefore, based on this implementation, when the first terminal device simultaneously establishes unicast communication connections to a plurality of other terminal devices, the first terminal device is uncertain that the current third terminal device is a relay terminal device between the first terminal device and which terminal device.

Optionally, a message type of the seventh message and/or a message type of the eighth message are/is one of the following types: a DCR message, a DCA message, a security mode command message, or a security mode complete message. The seventh message and the eighth message are not messages of a same type.

In correspondence to the foregoing described three implementations of unicast connection establishment of U2U relay:
If the first implementation, to be specific, UE-to-UE relay discovery and selection integrated in unicast connection establishment, is used, the seventh message and/or the eighth message may be messages/a message sent by the relay terminal to the source terminal or the target terminal in step 302, step 303, step 305, or step 306. Specifically, the message type of the seventh message and/or the message type of the eighth message are/is one of the following types: a DCR message, a DCA message, a security mode command message, and a security mode complete message. In this case, the seventh message and the eighth message are not messages of a same type. For example, it is assumed that the first terminal device is the source terminal, the second terminal device is the target terminal, and the third terminal device is the relay terminal. In this case, the seventh message may be the DCA message sent by the relay terminal to the source terminal in step 306, and the eighth message may be the DCR message sent by the relay terminal to the target terminal in step 302.

If the second implementation, to be specific, UE-to-UE relay discovery and selection integrated in model B direct discovery, is used, the seventh message and/or the eighth message may be messages/a message sent by the relay terminal to the source terminal or the target terminal in step 405 or step 406. Specifically, the message type of the seventh message and/or the message type of the eighth message are/is one of the following types: a DCR message, a DCA message, a security mode command message, or a security mode complete message. In this case, the seventh message and the eighth message are not messages of a same type. For example, it is assumed that the first terminal device is the source terminal, the second terminal device is the target terminal, and the third terminal device is the relay terminal. In this case, the seventh message may be the DCA message sent by the relay terminal to the source terminal in step 406, and the eighth message may be the DCR message sent by the relay terminal to the target terminal in step 405.

If the third implementation, to be specific, model A-based unicast connection establishment of UE-to-UE relay, is used, the seventh message and/or the eighth message may be messages/a message sent by the relay terminal to the source terminal or the target terminal in step 503 or step 504. Specifically, the message type of the seventh message and/or the message type of the eighth message are/is one of the following types: a DCR message, a DCA message, a security mode command message, or a security mode complete message. In this case, the seventh message and the eighth message are not messages of a same type. For example, it is assumed that the first terminal device is the source terminal, the second terminal device is the target terminal, and the third terminal device is the relay terminal. In this case, the seventh message may be the DCA message sent by the relay terminal to the source terminal in step 503, and the eighth message may be the DCR message sent by the relay terminal to the target terminal in step 504.

Optionally, the seventh message and/or the eighth message may alternatively be of message types/a message type other than the foregoing message types, for example, PC5-RRC messages/a PC5-RRC message or PC5-S messages/a PC5-S message, or the seventh message and/or the eighth message may be messages of new types/a message of a new type. This is not limited in this embodiment of this application.

A message type of one of the seventh message and the eighth message may be a PC5-RRC message or a PC5-S message, a message type of the other message is one of the foregoing described DCR message, DCA message, security mode command message, security mode complete message, solicitation message, or response message.

It is assumed that the manner 2 in the foregoing allocation manners of the first identifier is used, to be specific, the first identifier is allocated by the third terminal device to the second terminal device. In this case, after the first terminal device establishes the unicast connection to the third terminal device, and before the first terminal device establishes the end-to-end unicast connection to the second terminal device, the third terminal device sends the seventh message to the first terminal device, where the seventh message carries the information about the second terminal device. Correspondingly, after the second terminal device establishes the unicast connection to the third terminal device, and before the first terminal device establishes the end-to-end unicast connection to the second terminal device, the third terminal device sends the eighth message to the second terminal device, where the eighth message carries the information about the first terminal device. **In** this implementation, the seventh message indicates the second terminal device to establish a unicast communication connection to the third terminal device, and the first terminal device may communicate with the second terminal device via the third terminal device. The same applies to the eighth message, and details are not described again. Therefore, based on this implementation, when the first terminal device simultaneously establishes unicast communication connections to a plurality of other terminal devices, the first terminal device is uncertain that the current third terminal device is a relay terminal device between the first terminal device and which terminal device.

702: The third terminal device sends the second message to the second terminal device based on the first message. Correspondingly, the second terminal device receives the second message sent by the third terminal device.

In this embodiment of this application, the second message is generated based on the first message, and is used to transfer, to the second terminal device, the content in the first message sent by the first terminal device. In other words, data content included in the second message is the same as that included in the first message. Correspondingly, a message type of the second message is also the same as that of the first message. For details, refer to the descriptions of the message type of the first message in step 701. Details are not described herein in this embodiment of this application.

To allow the second terminal device to determine, when the second terminal device receives the second message, that the second message is from the first message sent by which terminal device to the third terminal device, the second message may carry the first identifier and/or the second identifier. Specifically, the following three implementations are included.

Manner 1: The second message carries the second identifier. In this case, the second identifier is different from the first identifier. The second identifier may be allocated by the second terminal device to the first terminal device, or may be allocated by the third terminal device to the first terminal device. A specific implementation in which the third terminal device sends the second message to the second terminal device based on the first message is: The third terminal device replaces the first identifier carried in the first message with the second identifier, to obtain the second message. The third terminal device sends the second message to the second terminal device. Based on this implementation, when receiving the second message, the second terminal device can determine, based on the second identifier in the second message, that the second message is from the first message sent by the first terminal device to the third terminal device.

Manner 2: The second message carries the first identifier and the second identifier. The first identifier (the second identifier) may be allocated by the first terminal device (the second terminal device) to the second terminal device (the first terminal device), or may be allocated by the third terminal device to the second terminal device (the first terminal device). Correspondingly, the first message also carries the first identifier and the second identifier. In this case, the second message is the same as the first message. Specifically, before the third terminal device receives the first message from the first terminal device, the method further includes: sending a ninth message to the first terminal device, where the ninth message carries the second identifier; and sending a tenth message to the second terminal device, where the tenth message carries the first identifier. Based on this implementation, before sending the first message, the first terminal device can determine, based on the ninth message sent by the third terminal device, the second identifier allocated by the second terminal device or the third terminal device to the first terminal device, to include the identifier of the first terminal device and the first identifier of the second terminal device in the first message when sending the first message. When receiving the second message, the second terminal device determines, based on the second identifier in the second message, that the second message is from the first message sent by the first terminal device to the third terminal device; and can also determine, based on the first identifier in the second message, that the second message is sent to the second terminal device.

Optionally, a message type of the ninth message and/or a message type of the tenth message may be RRC messages/an RRC message, and may be specifically PC5-RRC messages/a PC5-RRC message or PC5-S messages/a PC5-S message, or may be the messages/the message described in the foregoing described three implementations of unicast connection establishment of U2U relay. The message types of the ninth message and the tenth message are not limited in this embodiment of this application.

Manner 3: The second message carries the first identifier, and the first identifier is the same as the second identifier. Correspondingly, the first message is the same as the second message. In this case, the first identifier (the second identifier) is allocated by the third terminal device to the second terminal device (the first terminal device). Based on this implementation, when receiving the second message, the second terminal device can obtain the first identifier in the second message. Because the first identifier is the same as the second identifier, the first identifier indicates that the second message is from the first message sent by the first terminal device to the third terminal device, and also indicates that the second message is sent to the second terminal device.

In a possible implementation, the first terminal device sends the first message to the third terminal device through a preset sidelink RLC channel. Correspondingly, the third terminal device receives the first message from the first terminal device through the preset sidelink RLC channel. The third terminal device sends the second message to the second terminal device based on the information about the second terminal device through a preset sidelink RLC channel. Correspondingly, the second terminal device receives, through the preset sidelink RLC channel, the second message sent by the third terminal device.

This implementation may be applied to a scenario in which there is no adaptation layer for a signaling radio bearer (Signaling Radio Bearer, SRB) currently used to transmit the first message. It should be additionally noted that this implementation may also be applied to a scenario in which there is an adaptation layer for the SRB. This is not limited in this embodiment of this application. When the first terminal device sends the first message, the first message carries the information about the second terminal device. Optionally, the information about the second terminal device may be the APP ID of the second terminal device. The third terminal device may determine, based on the information about the second terminal device in the first message, that the content in the first message should be forwarded to the second terminal device, and forward the first message to the second terminal device with reference to a unicast connection link between the third terminal device and the second terminal device established before. In this implementation, the first message and the second message are the same.

The preset sidelink RLC channel is a default or specific sidelink RLC channel. An end-to-end SRB 0, SRB 1, SRB 2, and SRB 3 use the default or specific sidelink RLC channel on a hop-by-hop link. Based on this implementation, the relay terminal can determine, in the U2U relay M:N network topology scenario based on the terminal device information carried in the first message, a specific terminal device to which a received message should be forwarded. This helps ensure normal communication in the U2U relay scenario. Optionally, in this implementation, the first message may be one of messages transmitted when the first terminal device and the second terminal device establish the end-to-end unicast connection. The messages transmitted when the first terminal device and the second terminal device establish the end-to-end unicast connection include a DCR message, a security mode command message, a security mode complete message, and a DCA message. The DCR message corresponds to the SRB 0, the security mode command message corresponds to the SRB 1, the security mode complete message corresponds to the SRB 2, and the DCA message corresponds to the SRB 3.

Based on the foregoing descriptions of unicast connection establishment of the U2U relay terminal, when a source terminal establishes unicast connection communication with a plurality of target terminals, a plurality of relay terminals find different target terminals. In this case, the source terminal receives DCA messages sent by the plurality of relay terminals. In this case, the source terminal may not know a target terminal found by a specific relay terminal.

For example, as shown in FIG. 8, a source terminal expects to establish unicast connections to a target terminal 1, a target terminal 2, and a target terminal 3. Therefore, the source terminal 1 broadcasts a DCR message, where the DCR message carries APP IDs of the target terminal 1, the target terminal 2, and the target terminal 3. Alternatively, the source terminal 1 broadcasts three DCR messages, and each DCR message carries information about one target terminal. For example, a first DCR message carries an APP ID of the target terminal 1, a second DCR message carries an APP ID of the target terminal 2, and a third DCR message carries an APP ID of the target terminal 3. Source addresses of the three DCR messages are the same, and are all L2 addresses of the source terminal. When receiving the DCR message, a relay terminal 1 and a relay terminal 2 determine to help the source terminal forward the DCR message. After the relay terminal 1 and the relay terminal 2 forward the DCR message, the target terminal 1 and the target terminal 2 both return a DCA message to the relay terminal 1 after receiving the DCR message via the relay terminal 1. After receiving the DCR message via the relay terminal 2, the target terminal 3 returns a DCA message to the relay terminal 1. After receiving the DCA messages of the target terminal 1 and the target terminal 2, the relay terminal 1 forwards the DCA messages to the source terminal. After receiving the DCA message of the target terminal 2, the relay terminal 2 also forwards the DCA message to the source terminal. In this case, the source terminal may simultaneously receive the two DCA messages from the relay terminal 1 and the DCA message from the relay terminal 2. In this case, the source terminal may not know specific target terminals to which the three DCA messages correspond, and not know that the relay terminal 1 and the relay terminal 2 are relays between the source terminal and which target terminals.

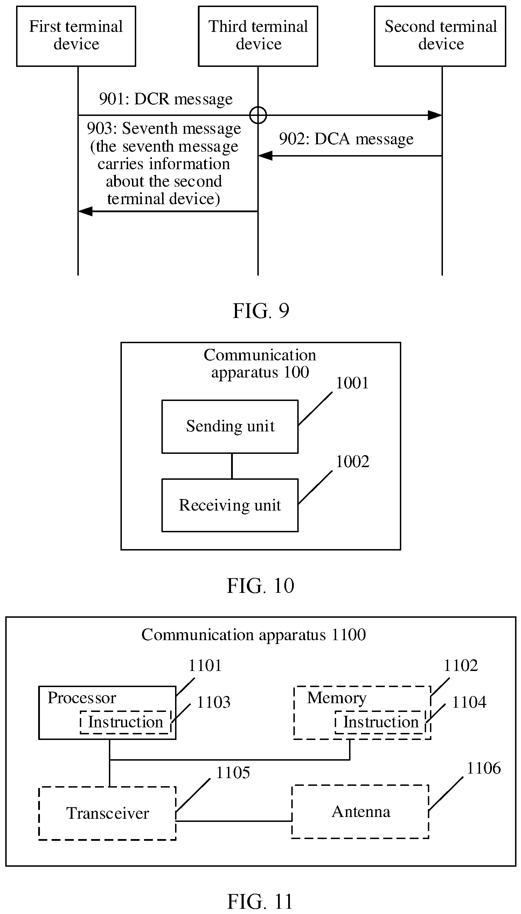

To allow the source terminal to determine a correspondence between the target terminal and the relay terminal in a unicast connection establishment process, this application provides a communication method. Refer to FIG. 9. FIG. 9 is a schematic flowchart of another communication method according to an embodiment of this application. As shown in FIG. 9, the communication method includes the following step 901 to step 903. The method shown in FIG. 9 may be performed by a first terminal device, a second terminal device, and a third terminal device, or may be performed by a chip in the first terminal device, a chip in the second terminal device, or a chip in the third terminal device. In FIG. 9, an example in which the method is performed by the first terminal device, the second terminal device, and the third terminal device is used for description. An execution body of the communication method is not limited in this embodiment of this application.

901: The third terminal device receives and forwards a DCR message from the first terminal device.

In this embodiment of this application, the first terminal device is a source terminal, the second terminal device is a target terminal, and the third terminal device is a relay terminal. The DCR message sent by the first terminal device carries information about the second terminal device, and optionally, an APP ID of the second terminal device. The first terminal device broadcasts the DCR message, where the DCR message requests to discover the second terminal device. After receiving the DCR message, the third terminal device determines to help the first terminal device forward the DCR message. Optionally, the third terminal device may broadcast the DCR message to the surroundings.

902: After receiving the DCR message sent by the third terminal device, the second terminal device sends a DCA message to the third terminal device. Correspondingly, the third terminal device receives the DCR message from the second terminal device.

In this embodiment of this application, after receiving the DCR message, the second terminal device may determine, by determining the information about the second terminal device in the DCR message, that the DCR message is for the second terminal device, and the second terminal device returns the DCR message to the third terminal device.

In a possible implementation, the DCR message carries information about the first terminal device. Optionally, the information about the first terminal device is an APP ID of the first terminal device. Based on this implementation, the second terminal device can determine that the DCR message is from the first terminal device, and also determines that the second terminal device can establish a unicast connection to the first terminal device via the third terminal device, to perform communication.

903: The third terminal device sends a seventh message to the first terminal device. Correspondingly, the first terminal device receives the seventh message from the third terminal device, where the seventh message carries the information about the second terminal device.

In this embodiment of this application, the seventh message indicates the first terminal device to establish the unicast connection to the second terminal device via the third terminal device. According to the method, when the first terminal device needs to establish unicast connections to a plurality of other terminal devices, the first terminal device can determine, based on the information about the second terminal device carried in the seventh message from the third terminal device, that the third terminal device is a relay device between the first terminal device and the second terminal device, and can communicate with the second terminal device through a unicast connection between the third terminal device and the second terminal device.

Optionally, a message type of the seventh message is a DCA message or a security mode complete message.

In correspondence to the foregoing described three implementations of unicast connection establishment of U2U relay:
If the first implementation, to be specific, UE-to-UE relay discovery and selection integrated in model B direct discovery, is used, the seventh message may be the DCA message sent by the relay terminal to the source terminal in step 306.

If the second implementation, to be specific, UE-to-UE relay discovery and selection integrated in unicast connection establishment, is used, the seventh message may be the security mode complete message sent by the relay terminal to the source terminal or the DCA message sent by the relay terminal to the source terminal in step 406.

If the third implementation, to be specific, model A-based unicast connection establishment of UE-to-UE relay, is used, the seventh message may be the security mode complete message sent by the relay terminal to the source terminal or the DCA message sent by the relay terminal to the source terminal in step 503.

In a possible implementation, the method further includes: The third terminal device sends an eighth message to the second terminal device. Correspondingly, the second terminal device receives the eighth message sent by the third terminal device, where the eighth message carries the information about the first terminal device. Based on this implementation, the second terminal device can determine that the third terminal device is a relay device between the second terminal device and the first terminal device, and can communicate with the first terminal device through a unicast connection between the third terminal device and the first terminal device.

The seventh message may alternatively be of a message type other than the foregoing message types, for example, a PC5-RRC message or a PC5-S message, or the seventh message may be a message of a new type. This is not limited in this embodiment of this application.

Optionally, a message type of the eighth message is a security mode command message.

In correspondence to the foregoing described three implementations of unicast connection establishment of U2U relay:
If the first implementation, to be specific, UE-to-UE relay discovery and selection integrated in unicast connection establishment, is used, the eighth message may be the security mode command message sent by the relay terminal to the target terminal in step 303.

If the second implementation, to be specific, UE-to-UE relay discovery and selection integrated in model B direct discovery, is used, the eighth message may be the security mode command message sent by the relay terminal to the target terminal in step 405.

If the third implementation, to be specific, model A-based unicast connection establishment of UE-to-UE relay, is used, the eighth message may be the security mode command message sent by the relay terminal to the target terminal in step 504.

The eighth message may alternatively be of a message type other than the foregoing message types, for example, a PC5-RRC message or a PC5-S message, or the eighth message may be a message of a new type. This is not limited in this embodiment of this application.

In a possible implementation, the seventh message and the eighth message herein are the same as the seventh message and the eighth message described in step 701 in FIG. 7, and any implementation corresponding to the seventh message and the eighth message described in FIG. 7 may be implemented. Details are not described herein in this embodiment of this application.

FIG. 10 is a diagram of a structure of a communication apparatus according to an embodiment of this application. The communication apparatus may be a terminal device or an apparatus (for example, a chip) having a function of the terminal device. Specifically, as shown in FIG. 10, the communication apparatus 100 may include a sending unit 1001 and a receiving unit 1002. The communication apparatus may perform related steps of the third terminal device in the foregoing method embodiments.

In an embodiment:
The receiving unit 1002 is configured to receive a first message from a first terminal device, where the first message carries a first identifier, and the first identifier indicates a second terminal device. The sending unit 1001 is configured to send a second message to the second terminal device based on the first message.

In a possible implementation, a message type of the first message and a message type of the second message both are one of the following types: a direct communication request DCR message, a direct communication accept DCA message, a security mode command message, or a security mode complete message.

In a possible implementation, the receiving unit 1002 is further configured to receive a third message from the first terminal device, where the third message carries the first identifier. The receiving unit 1002 is further configured to receive a fourth message from the second terminal device, where the fourth message carries a second identifier, and the second identifier indicates the first terminal device.

In a possible implementation, a message type of the third message and/or a message type of the fourth message are/is one of the following types: a DCR message, a DCA message, a security mode command message, a security mode complete message, a solicitation message, or a response message.

In a possible implementation, the sending unit 1001 is further configured to send a fifth message to the first terminal device, where the fifth message carries the first identifier and information about the second terminal device, and the fifth message is used to determine a correspondence between the first identifier and the second terminal device. The sending unit 1001 is further configured to send a sixth message to the second terminal device, where the sixth message carries a second identifier and information about the first terminal device, and the sixth message is used to determine a correspondence between the second identifier and the first terminal device.

In a possible implementation, a message type of the fifth message and/or a message type of the sixth message are/is one of the following types: a DCR message, a DCA message, a security mode command message, a security mode complete message, a solicitation message, a response message, or an announcement message.

In a possible implementation, the sending unit 1001 is further configured to send a seventh message to the first terminal device, where the seventh message carries the information about the second terminal device. The sending unit 1001 is further configured to send an eighth message to the second terminal device, where the eighth message carries the information about the first terminal device.

In a possible implementation, a message type of the seventh message and/or a message type of the eighth message are/is one of the following types: a DCR message, a DCA message, a security mode command message, or a security mode complete message.

In a possible implementation, when sending the second message to the second terminal device based on the first message, the sending unit 1001 is specifically configured to: replace the first identifier carried in the first message with the second identifier, to obtain the second message; and send the second message to the second terminal device.

In a possible implementation, the first message further carries the first identifier, and the second message is the same as the first message. Before receiving the first message from the first terminal device, the sending unit 1001 is further configured to: send a ninth message to the first terminal device, where the ninth message carries the second identifier; and send a tenth message to the second terminal device, where the tenth message carries the first identifier.

In a possible implementation, a message type of the ninth message and/or a message type of the tenth message are/is a radio resource control RRC message.

In a possible implementation, the second message carries the first identifier, the second identifier is the same as the first identifier, and the second message is the same as the first message.

In a possible implementation, the first identifier is located in an adaptation layer header of the first message.

In a possible implementation, the first message further carries information about the second terminal device. When receiving the first message from the first terminal device, the receiving unit 1002 is specifically configured to receive the first message from the first terminal device through a preset sidelink radio link control protocol RLC channel. The sending unit 1001 sends the second message to the second terminal device based on the first message, and the sending unit 1001 is specifically configured to send the second message to the second terminal device based on the information about the second terminal device through a preset sidelink RLC channel.

In another embodiment:
The receiving unit 1002 is configured to receive a DCR message from a first terminal device. The sending unit 1001 is configured to forward the DCR message from the first terminal device, where the DCR message carries information about a second terminal device. The receiving unit 1002 is further configured to receive a DCA message from the second terminal device. The sending unit 1001 is further configured to send a seventh message to the first terminal device, where the seventh message carries the information about the second terminal device, and the seventh message indicates the first terminal device to establish a unicast connection to the second terminal device via the third terminal device.

In a possible implementation, a message type of the seventh message is one of the following types: a DCA message, a security mode complete message, or a radio resource control RRC message.

In a possible implementation, the DCR message further carries information about the first terminal device.

In a possible implementation, the sending unit 1001 is further configured to send an eighth message to the second terminal device, where the eighth message carries the information about the first terminal device.

In a possible implementation, a message type of the eighth message is a security mode command message or an RRC message.

The communication apparatus in FIG. 10 may alternatively perform related steps of the first terminal device in the foregoing method embodiments.

In an embodiment:
The sending unit 1001 is configured to send a first message to a third terminal device, where the first message carries a first identifier, the first identifier indicates a second terminal device, and the first message is used by the third terminal device to send a second message to the second terminal device.

In a possible implementation, the second message carries a second identifier and/or the first identifier, and the second identifier indicates the first terminal device.

In a possible implementation, a message type of the first message and a message type of the second message both are one of the following types: a direct communication request DCR message, a direct communication accept DCA message, a security mode command message, or a security mode complete message.

In a possible implementation, the sending unit 1001 is further configured to send a third message to the third terminal device, where the third message carries the first identifier.

In a possible implementation, a message type of the third message is one of the following message types: a DCR message, a DCA message, a security mode command message, a security mode complete message, a solicitation message, or a response message.

In a possible implementation, the receiving unit 1002 is configured to receive a fifth message from the third terminal device, where the fifth message carries the first identifier and information about the second terminal device, and the fifth message is used to determine a correspondence between the first identifier and the second terminal device.

In a possible implementation, a message type of the fifth message is one of the following message types: a DCR message, a DCA message, a security mode command message, a security mode complete message, a solicitation message, a response message, or an announcement message.

In a possible implementation, the receiving unit 1002 is further configured to receive a seventh message sent by the third terminal device, where the seventh message carries the information about the second terminal device.

In a possible implementation, a message type of the seventh message is one of the following message types: a DCR message, a DCA message, a security mode command message, or a security mode complete message.

In a possible implementation, the second message carries the second identifier.

In a possible implementation, the first message further carries the second identifier, the second message carries the second identifier and the first identifier, and the first message is the same as the second message. Before the sending unit 1001 sends the first message to the third terminal device, the receiving unit 1002 is further configured to receive a ninth message from the third terminal device, where the ninth message carries the second identifier.

In a possible implementation, a message type of the ninth message is a radio resource control RRC message.

In a possible implementation, the second message carries the second identifier, the second identifier is the same as the first identifier, and the first message is the same as the second message.

In a possible implementation, the first identifier is located in an adaptation layer header of the first message.

In a possible implementation, when sending the first message to the third terminal device, the sending unit 1001 is specifically configured to send the first message to the third terminal device through a preset sidelink radio link control protocol RLC channel.

In another embodiment:
The sending unit 1001 is configured to send a DCR message, where the DCR message carries information about a second terminal device. The receiving unit 1002 is configured to receive a seventh message from a third terminal device, where the seventh message carries the information about the second terminal device, and the seventh message indicates the first terminal device to establish a unicast connection to the second terminal device via the third terminal device.

In a possible implementation, a message type of the seventh message is one of the following types: a DCA message, a security mode complete message, or an RRC message.

In a possible implementation, the DCR message further carries information about the first terminal device.

The communication apparatus in FIG. 10 may alternatively perform related steps of the second terminal device in the foregoing method embodiments.

In an embodiment:
The receiving unit 1002 is configured to receive a second message sent by a third terminal device, where the second message is obtained based on a first message of a first terminal device, the first message carries a first identifier, and the first identifier indicates the second terminal device.

In a possible implementation, the second message carries a second identifier and/or the first identifier, and the second identifier indicates the first terminal device.

In a possible implementation, a message type of the first message and a message type of the second message both are one of the following types: a direct communication request DCR message, a direct communication accept DCA message, a security mode command message, or a security mode complete message.

In a possible implementation, the sending unit 1001 is configured to send a fourth message to a third terminal device, where the fourth message carries the second identifier.

In a possible implementation, a message type of the fourth message is one of the following types: a DCR message, a DCA message, a security mode command message, a security mode complete message, a solicitation message, or a response message.

In a possible implementation, the receiving unit 1002 is further configured to receive a sixth message from the third terminal device, where the sixth message carries the second identifier and information about the first terminal device, and the sixth message is used to determine a correspondence between the second identifier and the first terminal device.

In a possible implementation, a message type of the sixth message is one of the following types: a DCR message, a DCA message, a security mode command message, a security mode complete message, a solicitation message, a response message, or an announcement message.

In a possible implementation, the receiving unit 1002 is further configured to: receive an eighth message from the third terminal device, where the eighth message carries the information about the first terminal device; and generate the second identifier based on the information about the first terminal device.

In a possible implementation, a message type of the eighth message is one of the following types: a DCR message, a DCA message, a security mode command message, or a security mode complete message.

In a possible implementation, the second message carries the second identifier.

In a possible implementation, the first message further carries the second identifier, the second message carries the second identifier and the first identifier, and the first message is the same as the second message. Before receiving the second message sent by the third terminal device, the receiving unit 1002 is further configured to receive a tenth message from the third terminal device, where the tenth message carries the first identifier.

In a possible implementation, a message type of the tenth message is a radio resource control RRC message.

In a possible implementation, the second message carries the second identifier, the second identifier is the same as the first identifier, and the first message is the same as the second message.

In a possible implementation, the first identifier is located in an adaptation layer header of the first message.

In a possible implementation, when receiving the second message sent by the third terminal device, the receiving unit 1002 is specifically configured to receive, through a preset sidelink radio link control protocol RLC channel, the second message sent by the third terminal device.

In another embodiment:
The receiving unit 1002 is configured to receive an eighth message sent by a third terminal device, where the eighth message carries information about a first terminal device.

In a possible implementation, a message type of the eighth message is one of a DCR message, a security mode command message, or an RRC message.

FIG. 11 is a diagram of a structure of a communication apparatus. The communication apparatus 1100 may be the first terminal device, the second terminal device, or the third terminal device in the foregoing method embodiments, or may be a chip, a chip system, a processor, or the like that supports the first terminal device, the second terminal device, or the third terminal device in implementing the foregoing methods. The communication apparatus may be configured to implement the methods described in the foregoing method embodiments. For details, refer to the descriptions in the foregoing method embodiments.

The communication apparatus 1100 may include one or more processors 1101. The processor 1101 may be a general-purpose processor, a dedicated processor, or the like. For example, the processor 1101 may be a baseband processor or a central processing unit. The baseband processor may be configured to process a communication protocol and communication data. The central processing unit may be configured to control a communication apparatus (for example, a base station, a baseband chip, a terminal, a terminal chip, a DU, or a CU), execute a software program, and process data of the software program.

Optionally, the communication apparatus 1100 may include one or more memories 1102. The memory 1102 stores instructions 1104, and the instructions may be run on the processor 1101, so that the communication apparatus 1100 performs the methods described in the foregoing method embodiments. Optionally, the memory 1102 may further store data. The processor 1101 and the memory 1102 may be disposed separately, or may be integrated together.

Optionally, the communication apparatus 1100 may further include a transceiver 1105 and an antenna 1106. The transceiver 1105 may be referred to as a transceiver unit, a transceiver, a transceiver circuit, or the like, and is configured to implement a transceiver function. The transceiver 1105 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

The communication apparatus 1100 is the first terminal device, the second terminal device, or the third terminal device. The processor 1101 is configured to perform a data processing operation of the first terminal device, the second terminal device, or the third terminal device in the foregoing method embodiments. The transceiver 1105 is configured to perform a data sending/receiving operation of the first terminal device, the second terminal device, or the third terminal device in the foregoing method embodiments.

In another possible design, the processor 1101 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1101 may store instructions 1103. When the instructions 1103 are run on the processor 1101, the communication apparatus 1100 is enabled to perform the methods described in the foregoing method embodiments. The instructions 1103 may be fixed in the processor 1101. In this case, the processor 1101 may be implemented by hardware.

In still another possible design, the communication apparatus 1100 may include a circuit. The circuit may implement a sending, receiving, or communication function in the foregoing method embodiments. The processor and the transceiver described in this embodiment of this application may be implemented on an integrated circuit (integrated circuit, IC), an analog IC, a radio frequency integrated circuit RFIC, a hybrid signal IC, an application-specific integrated circuit (application-specific integrated circuit, ASIC), a printed circuit board (printed circuit board, PCB), an electronic device, or the like.

The communication apparatus described in the foregoing embodiment may be the first terminal device, the second terminal device, or the third terminal device. However, a scope of the communication apparatus described in embodiments of this application is not limited thereto, and a structure of the communication apparatus may not be limited by FIG. 11. The communication apparatus may be an independent device or may be a part of a large device. For example, the communication apparatus may be:
(1) an independent integrated circuit IC, a chip, or a chip system or subsystem;
(2) a set that has one or more ICs, where optionally, the IC set may further include a storage component configured to store data and instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others.

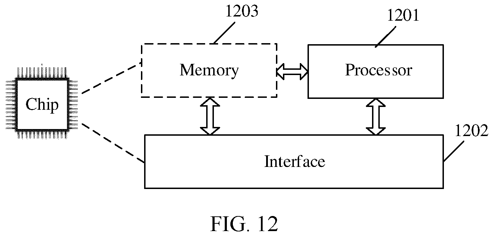

For a case in which the communication apparatus may be the chip or the chip system, refer to a diagram of a structure of a chip shown in FIG. 12. The chip shown in FIG. 12 includes a processor 1201 and an interface 1202. Optionally, the chip may further include a memory 1203. There may be one or more processors 1201, and there may be a plurality of interfaces 1202.

In a design, when the chip is configured to implement a function of the third terminal device in embodiments of this application,
the processor 1201 is configured to perform a data processing operation of the third terminal device in embodiments of this application, and
the interface 1202 is configured to receive or output a signal.

In an embodiment, the interface 1202 is configured to receive a first message from a first terminal device, where the first message carries a first identifier, and the first identifier indicates a second terminal device. The processor 1201 is configured to determine the second terminal device based on the first message. The interface 1202 is further configured to output a second message to the second terminal device.

The chip may further perform any possible implementation corresponding to the third terminal device in the method embodiment shown in FIG. 7.

In another embodiment, the interface 1202 is configured to receive a DCR message from a first terminal device. The interface 1202 is configured to output the DCR message from the first terminal device, where the DCR message carries information about a second terminal device. The interface 1202 is further configured to receive a DCA message from the second terminal device. The interface 1202 is further configured to output a seventh message to the first terminal device, where the seventh message carries the information about the second terminal device, and the seventh message indicates the first terminal device to establish a unicast connection to the second terminal device via the third terminal device.

The chip may further perform any possible implementation corresponding to the third terminal device in the method embodiment shown in FIG. 9.

In another design, when the chip is configured to implement a function of the first terminal device in embodiments of this application,
the processor 1201 is configured to perform a data processing operation of the first terminal device in the foregoing method embodiments, and
the interface 1202 is configured to receive or output a signal.

In an embodiment, the interface 1202 is configured to output a first message to a third terminal device, where the first message carries a first identifier, the first identifier indicates a second terminal device, and the first message is used by the third terminal device to send a second message to the second terminal device.

The chip may further perform any possible implementation corresponding to the first terminal device in the method embodiment shown in FIG. 7.

In another embodiment, the interface 1202 is configured to output a DCR message, where the DCR message carries information about a second terminal device. The interface 1202 is further configured to receive a seventh message from a third terminal device, where the seventh message carries the information about the second terminal device, and the seventh message indicates the first terminal device to establish a unicast connection to the second terminal device via the third terminal device.

The chip may further perform any possible implementation corresponding to the first terminal device in the method embodiment shown in FIG. 9.

In still another design, when the chip is configured to implement a function of the second terminal device in embodiments of this application,
the processor 1201 is configured to perform a data processing operation of the second terminal device in the foregoing method embodiments, and
the interface 1202 is configured to receive or output a signal.

In an embodiment, the interface 1202 is configured to receive a second message sent by a third terminal device, where the second message is obtained based on a first message of a first terminal device, the first message carries a first identifier, and the first identifier indicates the second terminal device.

The chip may further perform any possible implementation corresponding to the second terminal device in the method embodiment shown in FIG. 7.

In another embodiment, the interface 1202 is configured to receive an eighth message sent by a third terminal device, where the eighth message carries information about a first terminal device.

The chip may further perform any possible implementation corresponding to the second terminal device in the method embodiment shown in FIG. 9.

It may be understood that, in some scenarios, some optional features in embodiments of this application may be independently implemented without depending on another feature, for example, a solution on which the optional features currently are based, to resolve a corresponding technical problem and achieve a corresponding effect. Alternatively, in some scenarios, the optional features may be combined with another feature based on a requirement. Correspondingly, the communication apparatus provided in embodiments of this application may also correspondingly implement these features or functions. Details are not described herein.

It should be understood that the processor in embodiments of this application may be an integrated circuit chip, and has a signal processing capability. In an implementation process, the steps in the foregoing method embodiments may be completed by using an integrated logic circuit of hardware in the processor or instructions in a form of software. The processor may be a general purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component.

It may be understood that the memory in embodiments of this application may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and the volatile memory is used as an external cache. By way of example but not limitation, many forms of RAM are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and the methods described in this specification includes but is not limited to these memories and any memory of another proper type.

This application further provides a computer-readable medium, configured to store computer software instructions. When the instructions are executed by a communication apparatus, the function in any one of the foregoing method embodiments is implemented.

This application further provides a computer program product, configured to store computer software instructions. When the instructions are executed by a communication apparatus, the function in any one of the foregoing method embodiments is implemented.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, all or a part of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state drive (solid state drive, S SD)), or the like.

An embodiment of this application further provides a computer program product. When the computer program product runs on a processor, method procedures in the foregoing method embodiments are implemented.

Descriptions of embodiments provided in this application may refer to each other, and the descriptions of embodiments have respective focuses. For a part that is not described in detail in an embodiment, refer to related descriptions in another embodiment. For ease of description and brevity, for functions of the apparatuses and devices provided in embodiments of this application and operations performed by the apparatuses and devices, refer to related descriptions of the method embodiments of this application. The method embodiments and the apparatus embodiments may also be mutually referenced, combined, or cited.

A person skilled in the art may further understand that various illustrative logical blocks (illustrative logic block) and steps (step) that are listed in embodiments of this application may be implemented by electronic hardware, computer software, or a combination thereof. Whether the functions are implemented by hardware or software depends on a particular application and a design requirement of the entire system. A person skilled in the art may use various methods to implement the functions for each particular application, but it should not be understood that the implementation goes beyond the protection scope of embodiments of this application.

This application further provides a computer-readable storage medium. The computer-readable storage medium stores a computer program. When the computer-readable storage medium is executed by a computer, the function in any one of the foregoing method embodiments is implemented.

This application further provides a computer program product. When the computer program product is executed by a computer, the function in any one of the foregoing method embodiments is implemented.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, all or a part of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state drive (solid state drive, SSD)), or the like.

A person of ordinary skill in the art may understand that various numerical numbers such as "first" and "second" in this application are merely distinguished for ease of description, and are not intended to limit the scope and sequence of embodiments of this application.

The correspondences shown in the tables in this application may be configured, or may be pre-defined. Values of the information in the tables are merely examples, and other values may be configured. This is not limited in this application. When a correspondence between the information and the parameters is configured, not all the correspondences shown in the tables need to be configured. For example, in the tables in this application, correspondences shown in some rows may alternatively not be configured. For another example, proper deformations and adjustments such as splitting and combination may be performed based on the foregoing tables. Names of the parameters shown in titles of the foregoing tables may alternatively be other names that can be understood by a communication apparatus, and values or representation manners of the parameters may alternatively be other values or representation manners that can be understood by the communication apparatus. During implementation of the foregoing tables, another data structure, such as an array, a queue, a container, a stack, a linear table, a pointer, a linked list, a tree, a graph, a structure, a class, a pile, or a hash table, may alternatively be used. "Pre-define" in this application may be understood as "define", "define in advance", "store", "pre-store", "pre-negotiate", "preconfigure", "solidify", or "pre-burn".

A person of ordinary skill in the art may be aware that, in combination with the examples described in embodiments disclosed in this specification, units and algorithm steps may be implemented by electronic hardware or a combination of computer software and the electronic hardware. Whether these functions are performed by hardware or software depends on particular applications and design constraint conditions of the technical solutions. A person skilled in the art may use different methods to implement the described functions for each specific application. However, it should not be considered that this implementation goes beyond the scope of this application.

It may be clearly understood by a person skilled in the art that, for the purpose of convenient and brief description, for specific working processes of the foregoing systems, apparatuses, and units, refer to corresponding processes in the foregoing method embodiments. Details are not described herein again.

## Claims

1. A communication method, applied to a third terminal device, wherein the method comprises:
receiving a first message from a first terminal device, wherein the first message carries a first identifier, and the first identifier indicates a second terminal device; and
sending a second message to the second terminal device based on the first message.

2. The method according to claim 1, wherein a message type of the first message and a message type of the second message both are one of the following types: a direct communication request DCR message, a direct communication accept DCA message, a security mode command message, or a security mode complete message.

3. The method according to claim 1 or 2, wherein the method further comprises:
receiving a third message from the first terminal device, wherein the third message carries the first identifier; and
receiving a fourth message from the second terminal device, wherein the fourth message carries a second identifier, and the second identifier indicates the first terminal device.

4. The method according to claim 3, wherein
a message type of the third message and/or a message type of the fourth message are/is one of the following types:
a DCR message, a DCA message, a security mode command message, a security mode complete message, a solicitation message, or a response message.

5. The method according to claim 1 or 2, wherein the method further comprises:
sending a fifth message to the first terminal device, wherein the fifth message carries the first identifier and information about the second terminal device, and the fifth message is used to determine a correspondence between the first identifier and the second terminal device; and
sending a sixth message to the second terminal device, wherein the sixth message carries a second identifier and information about the first terminal device, and the sixth message is used to determine a correspondence between the second identifier and the first terminal device.

6. The method according to claim 5, wherein
a message type of the fifth message and/or a message type of the sixth message are/is one of the following types:
a DCR message, a DCA message, a security mode command message, a security mode complete message, a solicitation message, a response message, or an announcement message.

7. The method according to any one of claims 3 to 6, wherein the method further comprises:
sending a seventh message to the first terminal device, wherein the seventh message carries the information about the second terminal device; and
sending an eighth message to the second terminal device, wherein the eighth message carries the information about the first terminal device.

8. The method according to claim 7, wherein
a message type of the seventh message and/or a message type of the eighth message are/is one of the following types: a DCR message, a DCA message, a security mode command message, or a security mode complete message.

9. The method according to any one of claims 3 to 8, wherein the sending a second message to the second terminal device based on the first message comprises:
replacing the first identifier carried in the first message with the second identifier, to obtain the second message; and
sending the second message to the second terminal device.

10. The method according to any one of claims 3 to 8, wherein the first message further carries the first identifier, the second message is the same as the first message, and before the receiving a first message from a first terminal device, the method further comprises:
sending a ninth message to the first terminal device, wherein the ninth message carries the second identifier; and
sending a tenth message to the second terminal device, wherein the tenth message carries the first identifier.

11. The method according to claim 10, wherein a message type of the ninth message and/or a message type of the tenth message are/is a radio resource control RRC message.

12. The method according to claim 5 or 6, wherein the second message carries the first identifier, the second identifier is the same as the first identifier, and the second message is the same as the first message.

13. The method according to any one of claims 1 to 12, wherein the first identifier is located in an adaptation layer header of the first message.

14. The method according to claim 1, wherein the first message further carries information about the second terminal device;
the receiving a first message from a first terminal device comprises:
receiving the first message from the first terminal device through a preset sidelink radio link control protocol RLC channel; and
the sending a second message to the second terminal device based on the first message comprises:
sending the second message to the second terminal device based on the information about the second terminal device through a preset sidelink RLC channel.

15. A communication method, applied to a first terminal device, wherein the method comprises:
sending a first message to a third terminal device, wherein the first message carries a first identifier, the first identifier indicates a second terminal device, and the first message is used by the third terminal device to send a second message to the second terminal device.

16. The method according to claim 15, wherein the second message carries a second identifier and/or the first identifier, and the second identifier indicates the first terminal device.

17. The method according to claim 16, wherein a message type of the first message and a message type of the second message both are one of the following types: a direct communication request DCR message, a direct communication accept DCA message, a security mode command message, or a security mode complete message.

18. The method according to claim 16 or 17, wherein the method further comprises:
sending a third message to the third terminal device, wherein the third message carries the first identifier.

19. The method according to claim 18, wherein a message type of the third message is one of the following message types:
a DCR message, a DCA message, a security mode command message, a security mode complete message, a solicitation message, or a response message.

20. The method according to claim 16 or 17, wherein the method further comprises:
receiving a fifth message from the third terminal device, wherein the fifth message carries the first identifier and information about the second terminal device, and the fifth message is used to determine a correspondence between the first identifier and the second terminal device.

21. The method according to claim 20, wherein a message type of the fifth message is one of the following message types:
a DCR message, a DCA message, a security mode command message, a security mode complete message, a solicitation message, a response message, or an announcement message.

22. The method according to any one of claims 18 to 21, wherein the method further comprises:
receiving a seventh message sent by the third terminal device, wherein the seventh message carries the information about the second terminal device.

23. The method according to claim 22, wherein a message type of the seventh message is one of the following message types: a DCR message, a DCA message, a security mode command message, or a security mode complete message.

24. The method according to any one of claims 16 to 23, wherein the second message carries the second identifier.

25. The method according to any one of claims 16 to 24, wherein the first message further carries the second identifier, the second message carries the second identifier and the first identifier, and the first message is the same as the second message; and
before the sending a first message to a third terminal device, the method further comprises:
receiving a ninth message from the third terminal device, wherein the ninth message carries the second identifier.

26. The method according to claim 25, wherein a message type of the ninth message is a radio resource control RRC message.

27. The method according to claim 20 or 21, wherein the second message carries the second identifier, the second identifier is the same as the first identifier, and the first message is the same as the second message.

28. The method according to any one of claims 15 to 27, wherein the first identifier is located in an adaptation layer header of the first message.

29. The method according to claim 15, wherein the sending a first message to a third terminal device comprises:
sending the first message to the third terminal device through a preset sidelink radio link control protocol RLC channel.

30. A communication method, applied to a second terminal device, wherein the method comprises:
receiving a second message sent by a third terminal device, wherein the second message is obtained based on a first message of a first terminal device, the first message carries a first identifier, and the first identifier indicates the second terminal device.

31. The method according to claim 30, wherein the second message carries a second identifier and/or the first identifier, and the second identifier indicates the first terminal device.

32. The method according to claim 31, wherein a message type of the first message and a message type of the second message both are one of the following types: a direct communication request DCR message, a direct communication accept DCA message, a security mode command message, or a security mode complete message.

33. The method according to claim 31 or 32, wherein the method further comprises:
sending a fourth message to the third terminal device, wherein the fourth message carries the second identifier.

34. The method according to claim 33, wherein a message type of the fourth message is one of the following types:
a DCR message, a DCA message, a security mode command message, a security mode complete message, a solicitation message, or a response message.

35. The method according to claim 31 or 32, wherein the method further comprises:
receiving a sixth message from the third terminal device, wherein the sixth message carries the second identifier and information about the first terminal device, and the sixth message is used to determine a correspondence between the second identifier and the first terminal device.

36. The method according to claim 35, wherein a message type of the sixth message is one of the following types:
a DCR message, a DCA message, a security mode command message, a security mode complete message, a solicitation message, a response message, or an announcement message.

37. The method according to any one of claims 33 to 36, wherein the method further comprises:
receiving an eighth message from the third terminal device, wherein the eighth message carries the information about the first terminal device; and
generating the second identifier based on the information about the first terminal device.

38. The method according to claim 37, wherein a message type of the eighth message is one of the following types:
a DCR message, a DCA message, a security mode command message, or a security mode complete message.

39. The method according to any one of claims 31 to 38, wherein the second message carries the second identifier.

40. The method according to any one of claims 31 to 38, wherein the first message further carries the second identifier, the second message carries the second identifier and the first identifier, and the first message is the same as the second message; and
before the receiving a second message sent by a third terminal device, the method further comprises:
receiving a tenth message from the third terminal device, wherein the tenth message carries the first identifier.

41. The method according to claim 40, wherein a message type of the tenth message is a radio resource control RRC message.

42. The method according to claim 35 or 36, wherein the second message carries the second identifier, the second identifier is the same as the first identifier, and the first message is the same as the second message.

43. The method according to any one of claims 30 to 42, wherein the first identifier is located in an adaptation layer header of the first message.

44. The method according to claim 30, wherein the receiving a second message sent by a third terminal device comprises:
receiving, through a preset sidelink radio link control protocol RLC channel, the second message sent by the third terminal device.

45. A communication apparatus, wherein the communication apparatus comprises a unit for performing the method according to any one of claims 1 to 14, the communication apparatus comprises a unit for performing the method according to any one of claims 15 to 29, or the communication apparatus comprises a unit for performing the method according to any one of claims 30 to 44.

46. A communication apparatus, comprising a processor, wherein the processor is configured to execute a computer program or instructions stored in a memory, to implement the method according to any one of claims 1 to 14, implement the method according to any one of claims 15 to 29, or implement the method according to any one of claims 30 to 44.

47. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 14 by using a logic circuit or executing instructions, the processor is configured to implement the method according to any one of claims 15 to 29 by using a logic circuit or executing instructions, or the processor is configured to implement the method according to any one of claims 30 to 44 by using a logic circuit or executing instructions.

48. A computer-readable storage medium, wherein the storage medium stores a computer program or instructions, and when the computer program or the instructions are executed by a communication apparatus, the method according to any one of claims 1 to 14 is performed, the method according to any one of claims 15 to 29 is performed, or the method according to any one of claims 30 to 44 is performed.
